(19) Europäisches Patentamt
European Patent Office
Office européen des brevets

(11) EP 4 240 797 B1

(12) EUROPÄISCHE PATENTSCHRIFT

(45) Veröffentlichungstag und Bekanntmachung des Hinweises auf die Patenterteilung:
**28.08.2024 Patentblatt 2024/35**

(21) Anmeldenummer: **23700679.6**

(22) Anmeldetag: **10.01.2023**

(51) Internationale Patentklassifikation (IPC):
***C09B 69/10*** $^{(2006.01)}$ ***C09K 9/00*** $^{(2006.01)}$

(52) Gemeinsame Patentklassifikation (CPC):
**C09B 69/103; C09B 67/0034; C09K 9/02; C09K 11/06**

(86) Internationale Anmeldenummer:
**PCT/EP2023/050442**

(87) Internationale Veröffentlichungsnummer:
**WO 2023/135127 (20.07.2023 Gazette 2023/29)**

(54) **KOMBINATION SPEZIFISCHER ANNELLIERTER NAPHTHOPYRAN-ISOMERE**

COMBINATION OF SPECIFIC ANNELLATED NAPHTHOPYRANE ISOMERS

ASSOCIATION D'ISOMÈRES DE TYPE NAPHTOPYRANE ANNELÉS SPÉCIFIQUES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.01.2022 DE 102022100946**

(43) Veröffentlichungstag der Anmeldung:
**13.09.2023 Patentblatt 2023/37**

(73) Patentinhaber: **Rodenstock GmbH**
**80687 München (DE)**

(72) Erfinder:
- **WEIGAND, Udo**
**81247 München (DE)**
- **ROHLFING, Yven**
**81547 München (DE)**
- **ZINNER, Herbert**
**85296 Rohrbach (DE)**

(74) Vertreter: **Müller-Boré & Partner Patentanwälte PartG mbB**
**Friedenheimer Brücke 21**
**80639 München (DE)**

(56) Entgegenhaltungen:
**EP-A1- 1 529 780 EP-A1- 3 351 573**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 240 797 B1

## Beschreibung

Die vorliegende Erfindung betrifft die Kombination spezieller photochromer annellierter Naphthopyran-Isomere gemäß den nachstehenden Formeln(I) und (II) und deren Einbringung in Thiourethan-Polymere. Diese phototropen Polymere zeichnen sich durch sehr stabile und ästhetische Eindunklungs-Farbtöne aus. Darüber hinaus lassen sich so tief eindunkelnde und sehr schnell aufhellende phototrope Produkte realisieren. Thiourethan-Polymere sind die mit Abstand weitverbreitetsten Materialien für Kunststoff-Brillengläser mit höheren Brechungsindices von ≥ 1,60. Je höher der Brechungsindex ist, umso dünner kann ein Korrektions-Brillenglas gefertigt werden. Im Gegensatz zu Acrylat-Polymeren ist die Einbringung von photochromen Farbstoffen in Thiourethan-Polymere bisher nicht möglich gewesen, da die dichte dreidimensionale Polymer-Matrix der für Kunststoff-Brillengläser eingesetzten Thiourethan-Duroplast-Polymere den photochromen Farbstoffen keinerlei Raum gibt, die (farblose) Naphthopyran-Form zur angeregten (farbigen) Merocyanin-Form durch langwellige UV-Strahlung zu öffnen (siehe auch Figur 1). Dadurch lässt sich keine Eindunklung des Thiourethan-Polymers bei UV-Belichtung beobachten. Aus diesem Grund ist die Oberflächenbeschichtung mit photochromen Lacken - vor allem mittels Spin Coating - bisher die Methode der Wahl zur Herstellung phototroper Kunststoff-Brillengläser mit höheren Brechungsindices. Dieses Verfahren hat jedoch den Nachteil, dass dafür aufwändige und teure technische Anlagen nötig sind und nur relativ wenig Produkte pro Zeiteinheit hergestellt werden können, was mit relativ hohen Herstellungskosten einhergeht.

In EP 3 351 573 A1 wurde erstmals ein Verfahren zur Herstellung von massegefärbten phototropen Thiourethan-Polymeren beschrieben, das vor allem die Verwendung eines speziellen Polyether-Additivs beinhaltet. EP1529780 offenbart eine photochrome Zusammensetzung beinhaltend kondensierte Pyranen.

Der vorliegenden Erfindung liegt daher die Aufgabe zugrunde, Systeme bereitzustellen, deren Einbringung insbesondere in Thiourethan-Polymere zu phototropen Polymeren führt, die sich durch sehr stabile und ästhetische Eindunklungs-Farbtöne auszeichnen, ohne dass es solcher spezieller Additive bedarf, wie in EP 3 351 573 A1 zwingend vorgesehen. Die Einbringung soll dabei insbesondere auch durch Massefärbung bewerkstelligt werden können.

Diese Aufgabe wird durch die in den Ansprüchen gekennzeichneten Gegenstände gelöst.

Insbesondere wird die neuartige Kombination von zwei unterschiedlichen, spezifischen photochromen annellierten Naphthopyranen gemäß den nachfolgenden allgemeinen Formeln (I) und (II) bereitgestellt:

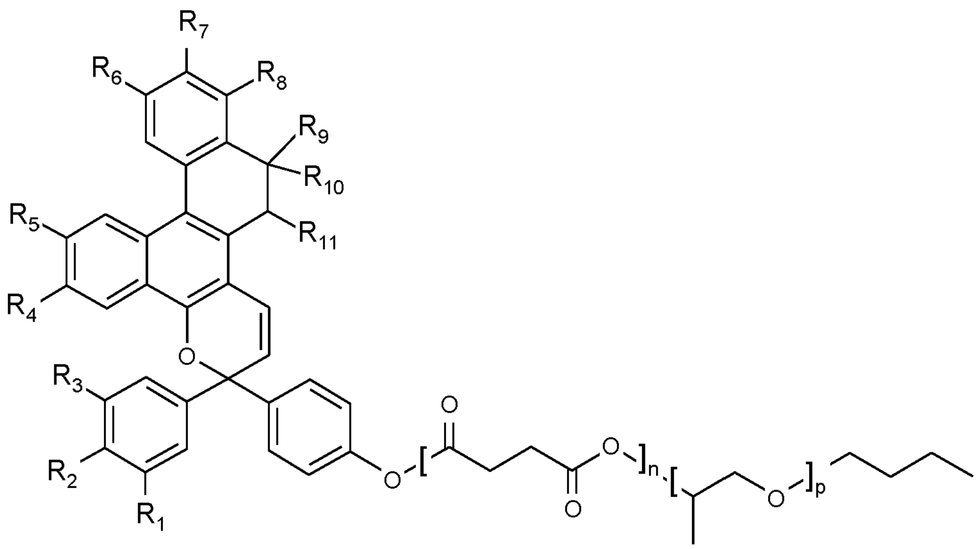

(I)

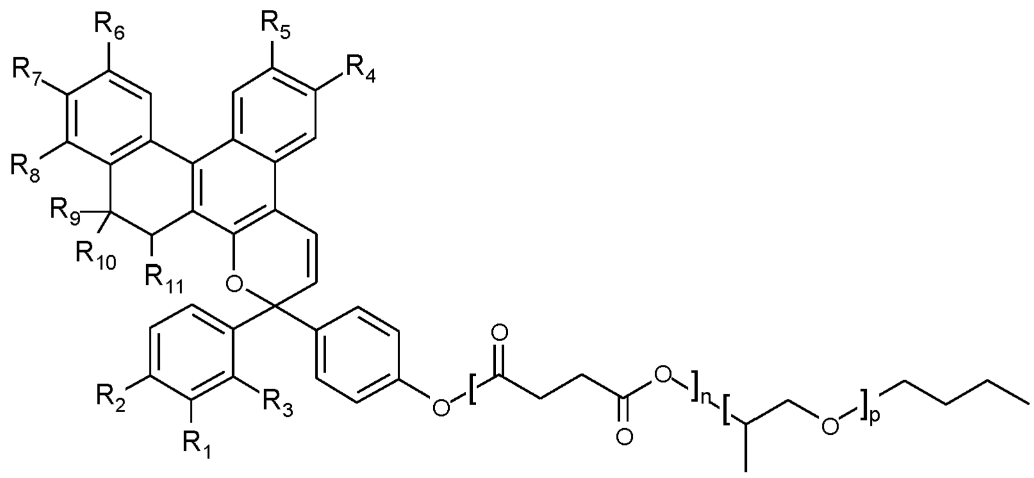

(II)

wobei in den Formeln (I) bzw. (II)

n eine ganze Zahl zwischen 0 und 1 darstellt und p eine ganze Zahl zwischen 10 und 50 darstellt;

die Reste $R_1$, $R_2$ und $R_3$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Diphenylamino-Rest, einem (4-Methoxyphenyl)-phenylamino-Rest, einem Bis(4-methoxyphenyl)amino-Rest, einem (4-Ethoxyphenyl)-phenylamino-Rest, einem Bis(4-Ethoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11-Dihydro-dibenz[b,f]azepinyl-Rest;

oder die Reste $R_1$ und $R_2$ zusammen die Gruppierung $-V-(CH_2)_m-W-$ darstellen, wobei V und W unabhängig voneinander aus den Gruppierungen -O-, -S-, $-NC_6H_5-$, $-CH_2-$, $-C(CH_3)_2-$, $-C(C_2H_5)_2-$ oder $-C(C_6H_5)_2-$ ausgewählt sind; m dabei eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass V oder W, wenn diese $-CH_2-$ darstellen, zusammen mit der jeweils benachbarten $CH_2$-Gruppe auch einen annellierten Benzol-Ring darstellen können;

die Reste $R_4$ und $R_5$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem Phenoxy-Rest, einem Benzyl-Rest oder einem Benzyloxy-Rest;

oder die Reste $R_4$ und $R_5$ zusammen die Gruppierung $-X-(CH_2)_q-Y-$ darstellen, wobei X und Y unabhängig voneinander aus den Gruppierungen -O-, -S-, $-NC_6H_5-$, $-CH_2-$, $-C(CH_3)_2-$, $-C(C_2H_5)_2-$ oder $-C(C_6H_5)_2-$ ausgewählt sind; q dabei eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass X oder Y, wenn diese $-CH_2-$ darstellen, zusammen mit der jeweils benachbarten $CH_2$-Gruppe auch einen annellierten Benzol-Ring darstellen können;

die Reste $R_6$, $R_7$ und $R_8$ jeweils unabhängig voneinander einen Substituenten darstellen, ausgewählt aus Wasserstoff, einem ($C_1$-$C_6$)-Alkyl-Rest, einem ($C_3$-$C_7$)-CycloalkylRest, einem ($C_1$-$C_6$)-Alkoxy-Rest, einem Phenyl-Rest oder einem Benzyl-Rest;

oder die Reste $R_6$ und $R_7$ zusammen oder $R_7$ und $R_8$ zusammen einen annellierten Benzol-Ring bilden, der un-,

mono- oder disubstituiert sein kann, wobei die Substituenten ausgewählt sein können aus Wasserstoff, einem ($C_1$-$C_6$)-Alkyl-Rest, einem ($C_1$-$C_6$)-Alkoxy-Rest, einem Phenyl-Rest oder einem Benzyl-Rest;

oder die Reste $R_6$ und $R_7$ zusammen oder $R_7$ und $R_8$ zusammen ein annelliertes Naphthalin-Ringsystem, ein annelliertes Benzofuran-Ringsystem, ein annelliertes Benzothiophen-Ringsystem, ein annelliertes 3,3-Dimethylinden-Ringsystem oder ein annelliertes 2H-Chromen-Ringsystem bilden;

die Reste $R_9$, $R_{10}$ und $R_{11}$ jeweils unabhängig voneinander einen Substituenten darstellen, ausgewählt aus einem ($C_1$-$C_6$)-Alkyl-Rest oder einem Phenyl-Rest.

In einer bevorzugten Ausführungsform sind in den Formeln (I) bzw. (II) die Reste $R_1$, $R_2$ und $R_3$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-CycloalkylRest, einem ($C_1$-$C_6$)-Thioalkyl-Rest, einem ($C_1$-$C_6$)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Diphenylamino-Rest, einem (4-Methoxyphenyl)-phenylamino-Rest, einem Bis(4-methoxyphenyl)amino-Rest, einem (4-Ethoxyphenyl)-phenylamino-Rest, einem Bis(4-Ethoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11-Dihydro-dibenz[b,f]azepinyl-Rest ausgewählt.

In einer weiteren bevorzugten Ausführungsform sind in den Formeln (I) bzw. (II) die Reste $R_4$ und $R_5$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem Phenoxy-Rest, einem Benzyl-Rest oder einem Benzyloxy-Rest ausgewählt-

In einer noch weiteren bevorzugten Ausführungsform sind in den Formeln (I) bzw. (II) die Reste $R_6$, $R_7$ und $R_8$ jeweils unabhängig voneinander einen Substituenten darstellen, ausgewählt aus Wasserstoff, einem ($C_1$-$C_6$)-Alkyl-Rest, einem ($C_3$-$C_7$)-CycloalkylRest, einem ($C_1$-$C_6$)-Alkoxy-Rest, einem Phenyl-Rest oder einem Benzyl-Rest ausgewählt.

Vorzugsweise stellen die Reste $R_9$, $R_{10}$ und $R_{11}$ in den Formeln (I) bzw. (II) jeweils unabhängig voneinander einen Substituenten, ausgewählt aus einem ($C_1$-$C_6$)-Alkyl-Rest oder einem Phenyl-Rest, dar.

Die Figuren zeigen:

Fig. 1 ein Syntheseschema zur Herstellung der erfindungsgemäß eingesetzten Verbindungen sowie die Funktionsweise deren Anregung;

Fig. 2 eine Veranschaulichung der Eindunklungs-Farbtöne erfindungsgemäß eingesetzter Verbindungen; und

Fig. 3 einen Vergleich der phototropen Leistung erfindungsgemäß eingesetzter Verbindungen mit von der Struktur her sehr ähnlichen Referenz-Verbindungen.

Der vorliegenden Erfindung liegt die überraschende Feststellung zugrunde, dass sich durch die neuartige Kombination von photochromen annellierten 2H-Naphthopyranen gemäß Formel (I) mit neuen photochromen annellierten 3H-Naphthopyranen gemäß Formel (II) bei Einbringung in Thiourethan-Polymere exzellente photochrome Eigenschaften realisieren lassen. Bei den erfindungsgemäßen Verbindungen der Formel (II) handelt es sich um geometrische Isomere von 2H-Naphthopyranen gemäß Formel (I). Annelliert an die Naphthopyran-Einheiten sind dabei jeweils die beiden Ringe mit den Substituenten $R_6$ bis $R_{11}$. Die auf Basis dieser Kombination erzeugten phototropen Thiourethan-Polymere zeichnen sich durch sehr stabile und ästhetische Eindunklungs-Farbtöne aus. Darüber hinaus lassen sich so tief eindunkelnde und sehr schnell aufhellende phototrope Produkte realisieren. Außerdem weisen die erfindungsgemäß kombinierten Verbindungen eine sehr gute Lebensdauer auf.

Im Gegensatz zu EP 3 351 573 A1, worin zur Herstellung von massegefärbten phototropen Thiourethan-Polymeren eben die Verwendung eines speziellen Polyether-Additivs erforderlich ist, wird bei der vorliegenden Erfindung das Problem der Einbringung in Thiourethan-Polymere durch den Einsatz dieser neuartigen Kombination von zwei unterschiedlichen, spezifisch für diesen Zweck maßgeschneiderten, photochromen annellierten Naphthopyran-Isomeren gemäß den Formeln (I) und (II) gelöst, mit der sich sehr stabile und ästhetische Eindunklungs-Farbtöne realisieren lassen. Die beiden Naphthopyran-Isomere weisen unterschiedliche Eindunklungs-Farbtöne auf, die sich in ihrer Kombination zu beispielsweise ästhetischen Grau- bzw. Braun-Tönen ergänzen. Dabei weisen die 3H-Naphthopyran-Isomere der Formel (II) gelborange bis rote Farbtöne auf, was eine sehr wichtige Komponente zur Realisierung ästhetischer Braun-Töne, aber auch genauso wichtig zur Realisierung ästhetischer Grau-Töne als Pendant zu den vorwiegend blau

(blauviolett bis blaugrün) eindunkelnden 2H-Naphthopyran-Isomeren der Formel (I) ist (siehe Figur 2). Diese Isomer-Kombination ist auch deswegen besonders vorteilhaft, da es durch die Wahl geeigneter Substituenten relativ leicht möglich ist, die Aufhellgeschwindigkeiten aneinander anzugleichen, was für den Einsatz als Mischungen entscheidend ist, damit der Eindunklungs-Farbton über den gesamten Anregungs- und Aufhellzyklus konstant bleibt.

Verbindungen gemäß der Formel (I) mit sauerstoffhaltigen Substituenten $R_4$ und $R_5$ wurden erstmals in EP 3 807 258 zum Einsatz in Kunststoffen aller Art vorgestellt.

Im Gegensatz zu herkömmlichen photochromen Farbstoffen, die, wie bereits erwähnt, bei Einbringung in kompakte Thiourethan-Duroplast-Polymere bei UV-Belichtung nicht eindunkeln, weisen die erfindungsgemäßen Naphthopyran-Isomere aufgrund der angehängten langen Poly(propylenoxy)-Ketten (mit $p \geq 10$ in Formeln (I) und (II)), die optional über eine Bernsteinsäureester-Brücke kovalent an den photochromen Farbstoff gebunden sind, eine exzellente Eindunklungstiefe auf. Offensichtlich wird durch die Anwesenheit der langen Poly(propylenoxy)-Kette die unmittelbare Farbstoff-Umgebung entweder sterisch (Änderung der Umgebungs-Netzwerkdichte) oder elektronisch (Änderung der Umgebungs-Polarität) so modifiziert, dass eine Öffnung der nicht-angeregten (farblosen) Form zur angeregten (farbigen) Form durch langwellige UV-Strahlung gut möglich wird. Die lange Poly(propylenoxy)-Kette sitzt nahe am photolabilen Zentrum des photochromen Farbstoffes und damit nahe am Ort des Bindungsbruches bei Anregung bzw. der Bindungs-Rückbildung bei der Aufhellung (siehe Figur 1) und kann so eine effiziente Abschirmung vom Thiourethan-Polymer bewirken. Ein wichtiger Aspekt der vorliegenden Erfindung ist die unerwartete Beobachtung, dass die Polarität der langen Poly(propylenoxy)-Kette für gute photochrome Eigenschaften absolut mitentscheidend ist. Sowohl eine polarere Poly(ethylenoxy)-Kette als auch eine unpolarere Paraffin-Kette zeigen bei etwa gleicher Kettenlänge eine deutlich schlechtere phototrope Leistung (siehe Figur 3) bzw. dunkeln bei UV-Belichtung überhaupt nicht ein.

Die erfindungsgemäß eingesetzten Verbindungen gemäß den Formeln (I) und (II) weisen bedingt durch die Anwesenheit der drei Nichtwasserstoff-Substituenten $R_9$ bis $R_{11}$ an den beiden nichtaromatischen Kohlenstoffatomen eine sehr gute Lebensdauer auf. Entsprechende Verbindungen mit weniger als drei Nichtwasserstoff-Substituenten weisen eine deutlich schlechtere Lebensdauer auf, da sie an dieser Stelle leicht oxidierbar sind und farbige Oxidationsprodukte entstehen (siehe nachstehende Tabelle 4). Drei Substituenten sind hier tatsächlich das Optimum. Vier Nichtwasserstoff-Substituenten sind bei den erfindungsgemäß eingesetzten Verbindungen gemäß Formel (I) und (II) aus sterischen Gründen unvorteilhaft, da ein weiterer Substituent am Kohlenstoffatom mit $R_{11}$ die Öffnung der (farblosen) Naphthopyran-Form zur angeregten (farbigen) Form durch langwellige UV-Strahlung stark behindert und dadurch nur eine schwache Eindunklung bei UV-Belichtung zu beobachten ist.

Der Umfang der vorliegenden Erfindung beschränkt sich im Gegensatz zu EP 3 351 573 A1 jedoch nicht nur auf die Bereitstellung homogen massegefärbter Thiourethan-Polymere mittels der erfindungsgemäßen Kombination, sondern umfasst vor allem auch Zweikomponenten-Systeme, bei denen eine 0,1 -1 mm dünne phototrope Thiourethan-Funktionsschicht auf einem Polymer-Grundkörper anpolymerisiert ist (Anguss-Verfahren). Dieses Verfahren hat neben attraktiven Herstellungskosten den großen Vorteil, dass auf diese Weise im Gegensatz zu homogen massegefärbten Produkten leicht ein exzellenter UV-Schutz für den Brillenträger erreicht werden kann, indem eine beliebige Menge UV-Absorber in den Polymer-Grundkörper eingebracht werden kann. Dies ist bei homogen massegefärbten phototropen Thiourethan-Polymeren nicht möglich, da eingebrachte UV-Absorber den photochromen Farbstoffen das zur Eindunklung benötigte langwellige UV-Licht wegfiltern. Die Erfindung umfasst insofern aber auch Sandwich-Systeme, bei denen sich eine 0,1 - 1 mm dünne phototrope Thiourethan-Funktionsschicht zwischen zwei Polymer-Körpern befindet.

Weiterhin ist der Umfang der Erfindung nicht auf die alleinige Anwesenheit der beiden Naphthoypyran-Isomere in Thiourethan-Polymere beschränkt. Zusätzlich zu der erfindungsgemäßen Kombination können weitere photochrome Farbstoffe (verschieden von solchen der Formeln (I) und (II)), Permanentfarbstoffe (für vorgefärbte Produkte) sowie Additive zur Verbesserung von Produkteigenschaften eingesetzt werden.

Die Synthese der erfindungsgemäß eingesetzten Verbindungen erfolgt aus den entsprechenden annellierten Naphthopyranen mit einem 4-Hydroxy-Substituenten am Benzolring, der an das Kohlenstoffatom neben dem Pyran-Sauerstoff gebunden ist. Gemäß dem Syntheseschema in Figur 1 werden daraus die erfindungsgemäß eingesetzten bzw. kombinierten Verbindungen hergestellt. Das Verfahren ist für die Verbindungen gemäß den Formeln (I) und (II) identisch. Insofern ist in Figur 1 nur der Pyran-Ring mit den beiden Aryl-Substituenten dargestellt.

Wenn n die Zahl 0 darstellt, werden im Handel erhältliche Polypropylenglykol-monobutylether (mit $p \geq 10$ in Formeln (I) und (II)) zuerst als Tosylat (Ts) aktiviert. Die Kettenlänge weist dabei jeweils eine Gauss-Verteilung auf, d.h. es liegen Mischungen mit unterschiedlichen Kettenlängen vor, die um ein Maximum herum verteilt sind. Danach erfolgt die kovalente Anbindung an die annellierten Naphthopyrane mittels einer üblichen Williamson-Ethersynthese.

Wenn n die Zahl 1 darstellt, wird zuerst mit Bernsteinsäureanhydrid umgesetzt. Die freie Carboxyl-Gruppe der Bernsteinsäure-Einheit wird danach mit Carbonyldiimidazol (CDI) aktiviert, was eine sehr milde Estersynthese mit den Polypropylenglykol-monobutylether erlaubt.

Die Funktionsweise der Anregung (Bindungsbruch durch langwelliges UV-Licht unter Entstehung der farbigen Form) ist ebenfalls in Figur 1 dargestellt. Die Aufhellung zurück zur nicht-angeregten Naphthopyran-Form erfolgt rein thermisch.

Zur Messung der spektralen und photochromen Eigenschaften werden die erfindungsgemäß eingesetzten Verbindungen gemäß Formeln (I) und (II) in ein optisches, d.h. für kommerzielle Kunststoff-Brillengläser geeignetes, Thiourethan-Polymer eingebracht. Dazu werden die photochromen Farbstoffe in der flüssigen Isocyanat-Komponente des Thiourethan-Polymers gelöst und nach Zusatz der Thiol-Komponente sowie des Polyadditions-Initiators mit Hilfe eines Temperaturprogrammes thermisch polymerisiert. Die phototrope Leistung (Eindunklungs- und Aufhellverhalten) sowie der Eindunklungs-Farbton der so hergestellten Probenkörper (Plangläser mit 2 mm Dicke) werden anschließend mit Norm-Messungen bei 23°C gemäß DIN EN ISO 8980-3 ermittelt.

Figur 2 zeigt anschaulich in a*/b*-Farbkoordinaten die Eindunklungs-Farbtöne erfindungsgemäß eingesetzter Verbindungen. Die Molekülstrukturen der in Figur 2 dargestellten Verbindungen sind in Tabellen 1 und 2 aufgeführt. Die erfindungsgemäß eingesetzten Verbindungen 1, 2 und 3 werden dabei durch die Formel (III) beschrieben, die erfindungsgemäß eingesetzten Verbindungen 4, 5 und 6 durch die Formel (IV). Formel (III) stellt dabei eine Untergruppe von Formel (I) dar, Formel (IV) eine Untergruppe von Formel (II).

Ein negativer a*-Wert im a*/b*-Farbkoordinatensystem repräsentiert einen grünen Eindunklungs-Farbton, ein positiver a*-Wert einen roten. Ein negativer b*-Wert repräsentiert einen blauen Farbton, ein positiver b*-Wert einen gelben. Davon abgeleitete Mischfarben wie violett oder orange finden sich dann im Bereich zwischen den jeweiligen Achsen (also zwischen der Blau- und Rot-Achse bzw. der Gelb- und Rot-Achse). Je weiter der Messpunkt vom Koordinaten-Ursprung entfernt ist, der definitionsgemäß die Abwesenheit von Farbe (also Grau-Töne) repräsentiert, umso intensiver ist der Farbton. Messpunkte in der Nähe des Koordinaten-Ursprungs symbolisieren matte Farbtöne wie z.B. bläulich-grau oder grünlich-grau. Eine Besonderheit sind Braun-Farbtöne, die eine Mischung von verschiedenen Grundfarben sind. Empirisch hat sich gezeigt, dass ästhetische Braun-Farbtöne (z.B. kastanienbraun) im a*/b*-Farbkoordinaten-System im Bereich der Region B anzutreffen sind.

Die Eindunklungs-Farbtöne der erfindungsgemäß eingesetzten Verbindungen gemäß Formel (III) befinden sich in Nähe der Blau-Achse. Die Farbtöne reichen von blaugrün (Verbindung 1) über blau (Verbindung 2) bis blauviolett (Verbindung 3). Die genauen Farbtöne waren aufgrund der Komplexität der Molekülstrukturen vorher kaum vorherzusagen. Dagegen findet man die Eindunklungs-Farbtöne der erfindungsgemäß eingesetzten Verbindungen gemäß Formel (IV) zwischen der Gelb- und Rot-Achse, die Farbtöne reichen von gelborange (Verbindung 4) über orange (Verbindung 5) bis rot (Verbindung 6). Dieser Farbverlauf ist wie erwartet. Je stärker (d.h. je elektronenreicher) der Donor $R_2$ ist, umso mehr verschiebt sich das längstwellige Absorptionsmaximum der angeregten Form bathochrom, und zwar von etwa 450 nm für die Verbindung 4 über etwa 470 nm für die Verbindung 5 bis hin zu etwa 530 nm für die Verbindung 6.

Wie eingangs ausgeführt ist Gegenstand der vorliegenden Erfindung die Kombination bzw. Mischung bzw. System eines Farbstoffes gemäß Formel (III) bzw. (I) mit einem Farbstoff gemäß Formel (IV) bzw. (II), um bei entsprechender Anpassung zueinander ästhetische Eindunklungs-Farbtöne zu erzielen. Um beispielsweise einen ästhetisch grauen Farbton zu realisieren, kann eine Kombination der erfindungsgemäß vorgesehenen Verbindungen 1 und 5 in das Polymer eingebracht werden, die zusammen bei passendem Mischungsverhältnis einen Farbton ergeben, der in der Nähe des Koordinaten-Ursprungs in der Region A liegt (siehe Figur 2). Dies ist ebenso gut möglich bei der Kombination der Verbindungen 2 und 4. Wichtig ist bei diesen Kombinationen immer, dass die Aufhellgeschwindigkeiten der Partner übereinstimmen - ansonsten resultiert ein ungewünschter Farbdrift während der Aufhellung (z.B. von grau nach braun, wenn der blaue Partner schneller aufhellt als der orange). Die Aufhellgeschwindigkeiten der erwähnten Kombinations-Paare (1+5 bzw. 2+4) sind daher aufeinander abgestimmt (siehe Tabellen 1 und 2). Diese Abstimmung liegt für einen Fachmann im handwerklichen Können.

Zur genauen Erzielung eines gewünschten Eindunklungs-Farbtones kann es bisweilen auch vorteilhaft sein, beispielsweise das Kombinations-Paar 3+6 als Zumischung zu einem der beiden anderen Paare einzusetzen. So lassen sich z.B. ästhetisch braune Eindunklungs-Farbtöne gut realisieren, obwohl das Kombinations-Paar 3+6 nur für sich gemischt keinen ästhetisch neutralen Farbton ergibt (die Mischfarbe der blauvioletten Verbindung 3 und der roten Verbindung 6 ist violett).

Die nachstehenden Tabellen 1 und 2 zeigen die Molekülstrukturen der in Figur 2 dargestellten Verbindungen gemäß den Formeln (III) und (IV) sowie deren Aufhellgeschwindigkeit nach 2 min bei 23°C im Thiourethan-Polymer.

Die erfindungsgemäße Verbindung 2 in Tabelle 1 weist eine Indeno-Annellierung als Substituenten $R_4$ und $R_5$ auf. Das aliphatische Kohlenstoffatom (mit zwei Methyl-Substituenten) der 3,3-Dimethylinden-Untereinheit ist dabei über $R_5$ angebunden und der Benzolring über $R_4$. Die erfindungsgemäße Verbindung 3 in Tabelle 1 weist eine 1,2-Ethylendioxy-Gruppierung als Substituenten $R_4$ und $R_5$ auf.

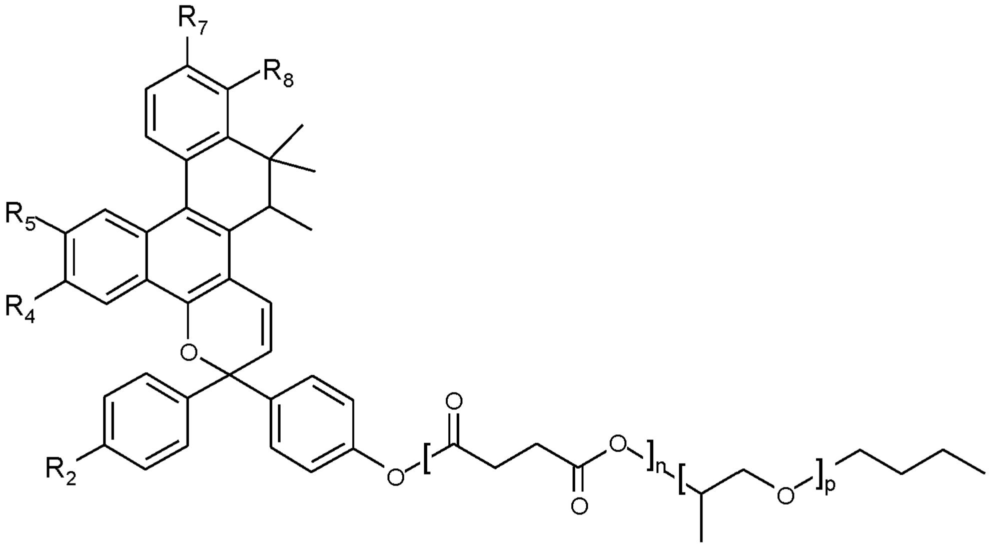

(III)

Tabelle 1:

| | Substituenten in Formel (III) | Relative Aufhellung nach 2 min $R_2$ min [%] |
|---|---|---|
| Erfindungsgemäße Verbindung 1 | p ≈ 42 (Gauss-Verteilung); n = 1 $R_2$ = $NPh_2$; $R_4$ = OMe; $R_5$ = $R_7$ = $R_8$ = H | 65 % |
| Erfindungsgemäße Verbindung 2 | p ≈ 42 (Gauss-Verteilung); n = 0 $R_2$ = $NPh_2$; $R_4$/$R_5$ = *o*-Phenylen-$CMe_2$ $R_7$ = $R_8$=H | 60 % |
| Erfindungsgemäße Verbindung 3 | p ≈ 42 (Gauss-Verteilung); n = 1 $R_2$ = $NPh_2$; $R_4$/$R_5$ = O-$CH_2CH_2$-O $R_7$/$R_8$ = *o*-Phenylen-O | 50 % |

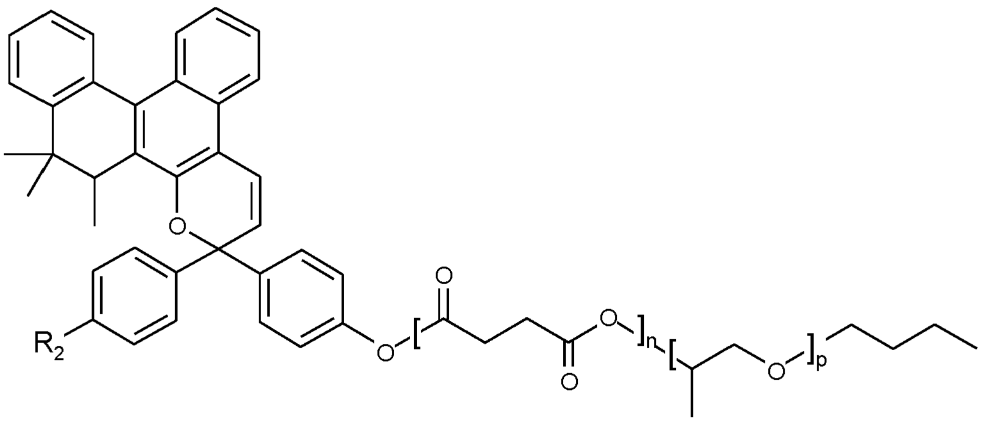

(IV)

Tabelle 2:

| | Substituenten in Formel (IV) | Relative Aufhellung nach 2 min $R_2$ min [%] |
|---|---|---|
| Erfindungsgemäße Verbindung 4 | p ≈ 42 (Gauss-Verteilung); n = 0; $R_2$ = H | 60% |
| Erfindungsgemäße Verbindung 5 | p ≈ 42 (Gauss-Verteilung); n = 0; $R_2$ = OEt | 65% |
| Erfindungsgemäße Verbindung 6 | p ≈ 42 (Gauss-Verteilung); n = 0; $R_2$ = $NPh_2$ | 50% |

Das Aufhellverhalten aus dem vollständig eingedunkelten Zustand der erfindungsgemäß eingesetzten Verbindungen ist ebenfalls in Tabelle 1 bzw. Tabelle 2 aufgeführt.

Als Maß für das Aufhellverhalten wird der prozentuale relative Anstieg der Transmission nach 2 Minuten Aufhellung definiert, normiert auf den photochromen Gesamthub der vollständigen Aufhellung. Diese praxisrelevante Größe zur Beschreibung der photochromen Kinetik wird hier Relative Aufhellung $R_{2\,\mathrm{min}}$ benannt:

$$R_{2\,\mathrm{min}} = 100 \times \frac{\tau_{2\,min} - \tau_s}{\tau_0 - \tau_s}\ [\%]$$

Dabei ist

$\tau_0$ der Lichttransmissionsgrad im nicht-angeregten Zustand;

$\tau_S$ der Lichttransmissionsgrad im eingedunkelten Zustand;

$\tau_{2\,\mathrm{min}}$ der Lichttransmissionsgrad nach 2 min Aufhellung aus dem eingedunkelten Zustand.

Der angegebene Prozentwert wird aus den Transmissionsdaten der phototropen Kinetikmessung nach DIN EN ISO 8980-3 bei 23°C berechnet. Im ersten Schritt wird die Transmissions-Differenz zwischen dem Zustand nach 2 min Aufhellung und dem zuvor erreichten eingedunkelten Zustand ermittelt, im zweiten Schritt die Transmissions-Differenz zwischen dem aufgehellten (nicht-angeregten) und dem eingedunkelten Zustand. Das Verhältnis der beiden Transmissions-Differenzen wird mit 100 multipliziert, um einen prozentualen Wert zu erhalten. Ein Wert 50 % $R_{2\,\mathrm{min}}$ bedeutet, dass nach 2 min Aufhellung bereits die Hälfte des photochromen Hubes zum voll aufgehellten Zustand zurückgelegt ist. Je größer der prozentuale Wert ist, umso schneller ist die Aufhellung. Im Handel erhältliche phototrope Kunststoff-Brillengläser weisen nach 2 min Aufhellung entsprechende Werte zwischen 20 % $R_{2\,\mathrm{min}}$ und 35 % $R_{2\,\mathrm{min}}$ auf, d.h. mit Hilfe der erfindungsgemäßen Kombination lassen sich phototrope hochbrechende Kunststoff-Brillengläser mit bisher unerreichten Aufhellgeschwindigkeiten in Kombination mit exzellenter Eindunklungstiefe realisieren. Letzteres ist wichtig, da es derart hohe Aufhellgeschwindigkeiten bisher nur in Verbindung mit einer deutlich schwächeren Eindunklung gibt.

Figur 3 zeigt einen Vergleich der phototropen Leistung erfindungsgemäß eingesetzter Verbindungen mit von der Struktur her sehr ähnlichen Referenz-Verbindungen. Die Molekülstrukturen der in Figur 3 dargestellten Verbindungen gemäß Formel (V) sind in der nachstehenden Tabelle 3 aufgeführt. Der Vergleich zeigt sehr anschaulich die Verbesserung durch die vorliegende Erfindung.

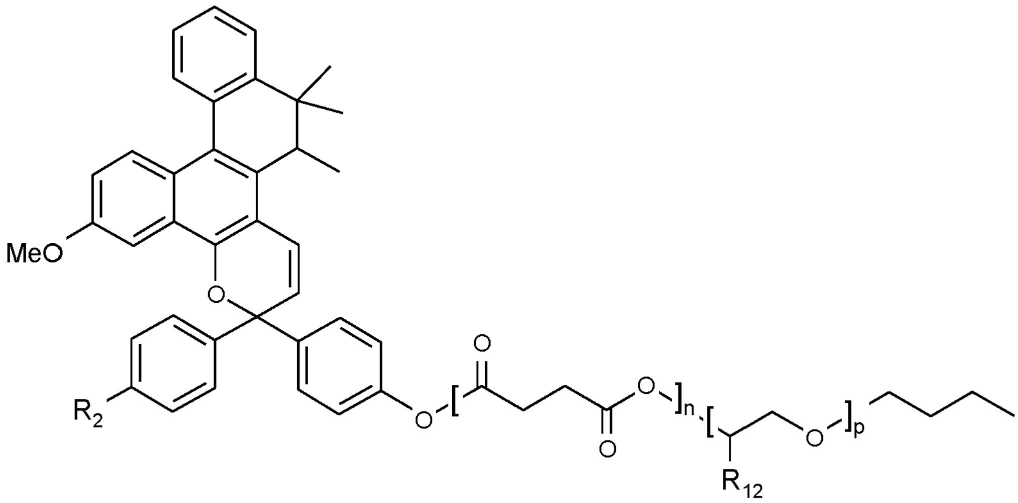

Tabelle 3:

| | Substituenten in Formel (V) |
|---|---|
| Erfindungsgemäße Verbindung 1 | $R_{12}$ = Me; p ≈ 42 (Gauss-Verteilung); n = 1; $R_2$ = $NPh_2$ |
| Erfindungsgemäße Verbindung 7 | $R_{12}$ = Me; p ≈ 16 (Gauss-Verteilung); n = 1; $R_2$ = $NPh_2$ |
| Referenz-Verbindung 1 | p = n = 0; $R_2$ = $NPh_2$ |
| Referenz-Verbindung 2 | $R_{12}$ = H; p ≈ 45 (Gauss-Verteilung); n = 1; $R_2$ = $NPh_2$ |
| Referenz-Verbindung 3 | $R_{12}$ = Me; p ≈ 42 (Gauss-Verteilung); n = 1; $R_2$ = N-Morpholinyl |

Die Bewertung der phototropen Leistung beinhaltet die Eindunklungstiefe bei Norm-Belichtung durch langwelliges UV-Licht sowie die Aufhellgeschwindigkeit bei 23°C. Ein photochromer Farbstoff ist umso besser, je geringer die Transmission (oder je höher die Absorption) nach UV-Belichtung ist und je schneller der Farbstoff wieder in seinen nichtangeregten Ausgangszustand zurückkehrt.

Die erfindungsgemäß eingesetzten Verbindungen 1 und 7 unterscheiden sich nur in der Länge der Poly(propylenoxy)-Ketten. Beide Farbstoffe zeigen erfindungsgemäß exzellentes Eindunklungs- und Aufhellverhalten, auch die kürzere Kette (mit p ≈ 16) ist noch effektiv. Unterhalb einer Poly(propylenoxy)-Kettenlänge von etwa 10 (p < 10) ist aber ein deutliches Nachlassen der phototropen Leistung zu beobachten. Die Abschirmung des Farbstoffes von der Thiourethan-Umgebung ist dann offensichtlich nicht mehr effektiv möglich.

Interessant sind die Eigenschaften der Referenz-Verbindungen 1 und 2 dazu im Vergleich. Referenz-Verbindung 1 hat keine angehängte lange Kette, während Referenz-Verbindung 2 eine praktisch gleich lange Kette wie die erfindungsgemäß eingesetzte Verbindung 1 aufweist, jedoch mit polareren Ethylenoxy-Einheiten ($R_{12}$ = H in Formel (V)). Beide Referenz-Verbindungen zeigen eine sehr schlechte phototrope Leistung, was anschaulich zeigt, dass sich nur Farbstoffe mit längeren Poly(propylenoxy)-Ketten ($R_{12}$ = Me; Me ist die chemisch gebräuchliche Abkürzung für eine Methyl-Gruppe) zum erfindungsgemäßen Einbringen in Thiourethan-Polymere eignen. Jedoch gibt es dabei Einschränkungen, wie Referenz-Verbindung 3 zeigt. Diese weist als Rest $R_2$ in Formel (V) einen N-Morpholinyl-Substituenten auf, im Gegensatz zur erfindungsgemäß eingesetzten Verbindung 1 mit einem Diphenylamino-Substituenten an dieser Position. Die Referenz-Verbindung 3 dunkelt deutlich schwächer ein, da sich ein beträchtlicher Teil dieses photochromen Farbstoffes bei der Polymerisation zersetzt. Grund dafür ist die reaktive, basische Morpholin-Einheit, die mit der Isocyanat-Komponente des Thiourethan-Polymers während der Polymerisation reagiert. Der nichtbasische Diphenylamino-Substiutent der erfindungsgemäß eingesetzten Verbindungen 1 und 7 hingegen ist in dieser Hinsicht inert. Daher können diese Farbstoffe gut in ein Thiourethan-Polymer eingebracht werden. Allgemein sind dafür also nur Farbstoffe mit nichtbasischen Substituenten wie Alkyl-, Aryl-, Alkyloxy-, Aryloxy- oder Diarylamino-Substituenten geeignet, nicht jedoch mit Dialkylamino- oder Arylalkylamino-Substituenten.

In der nachstehenden Tabelle 4 ist beispielhaft ein Vergleich der Strahlungsbeständigkeit der erfindungsgemäß eingesetzten Verbindung 5 mit von der Struktur her sehr ähnlichen Referenz-Verbindungen gemäß Formel (VI) aufgeführt.

Als Maß für die Strahlungsbeständigkeit wird der Verbleibende Photochrome Hub P* nach Bewitterung definiert:

$$P^* = 100 \times \frac{log\left(\frac{\tau_0^*}{\tau_s^*}\right)}{log\left(\frac{\tau_0}{\tau_s}\right)} [\%]$$

Dabei ist

$\tau_0$ der Lichttransmissionsgrad im nicht-angeregten Zustand;
$\tau_S$ der Lichttransmissionsgrad im eingedunkelten Zustand;
$\tau_0$* der Lichttransmissionsgrad im nicht-angeregten Zustand nach Bewitterung;
$\tau_S$* der Lichttransmissionsgrad im eingedunkelten Zustand nach Bewitterung.

Tabelle 4 zeigt einen Lebensdauer-Vergleich der erfindungsgemäß eingesetzten Verbindung 5 vs. Referenz-Verbindungen 4 bzw. 5.

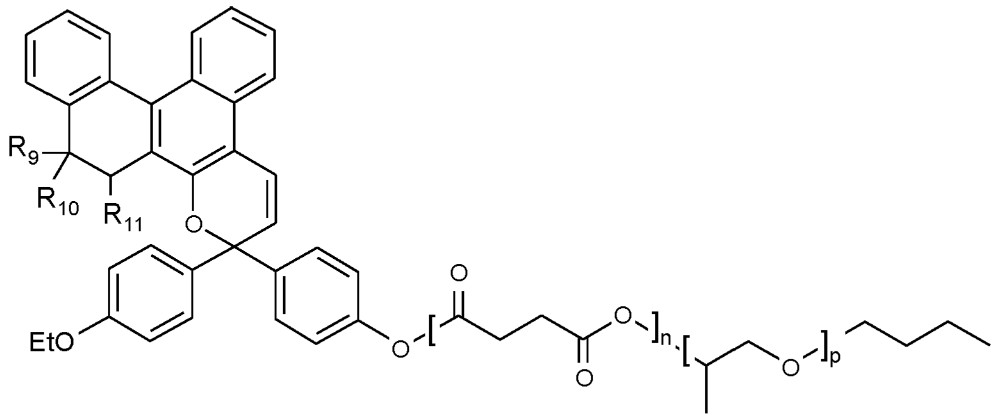

Tabelle 4:

| | Substituenten in Formel (VI) | Strahlungsbeständigkeit Bewitterung XeBO (50 h @ 700 W/m2) $P^*_{50\ h\ @\ 700\ W/m2}$ |
|---|---|---|
| Erfindungsgemäße Verbindung 5 | p ≈ 42 (Gauss-Verteilung); n = 0 $R_9 = R_{10} = R_{11}$ = Me | 88% |
| Referenz-Verbindung 4 | p ≈ 42 (Gauss-Verteilung); n = 0 $R_9$ = Me; $R_{10} = R_{11}$ = H | 49% |
| Referenz-Verbindung 5 | p ≈ 42 (Gauss-Verteilung); n = 0 $R_9 = R_{10} = R_{11}$ = H | 34% |

Der verbleibende photochrome Hub P* nach Bewitterung wird über das Verhältnis der Extinktionen vor und nach einem Lebensdauertest ermittelt und in Prozent des photochromen Hubes des ungeschädigten Probenkörpers angegeben. Die Probenkörper werden dabei 50 h einer intensiven Bestrahlung durch Xenonbogenlampen mit einer Bestrahlungsstärke 700 W/m$^2$ in einem handelsüblichen Bewitterungsgerät ausgesetzt. Die Messungen werden gemäß der Norm DIN EN ISO 8980-3 bei 23°C durchgeführt. Je größer der angegebene Prozentwert ist, umso geringer ist der Leistungsverlust.

Die erfindungsgemäß vorgesehene Verbindung 5 weist eine sehr gute Strahlungsbeständigkeit auf, bedingt durch die Anwesenheit von drei Methyl-Substituenten $R_9$, $R_{10}$ und $R_{11}$ an den beiden nichtaromatischen Kohlenstoffatomen. Ähnliche Verbindungen mit mehr Wasserstoffatomen an diesen beiden Positionen, wie die Referenz-Verbindungen 4 und 5, weisen dagegen eine deutlich schlechtere Strahlungsbeständigkeit auf, da diese an dieser Stelle leicht oxidierbar sind und farbige Oxidationsprodukte entstehen.

Wie bereits angemerkt, ist der Umfang der vorliegenden Erfindung nicht auf das Einbringen der erfindungsgemäßen Kombination photochromer annellierter Naphthopyran-Isomere in Thiourethan-Polymere beschränkt. Zusätzlich dazu können weitere photochrome Farbstoffe verwendet werden. Darüber hinaus können auch Permanentfarbstoffe (für vorgefärbte Produkte) sowie Additive zur Verbesserung von Produkteigenschaften eingesetzt werden.

Der Umfang der vorliegenden Erfindung ist zudem nicht auf homogen massegefärbte Thiourethan-Polymere beschränkt, sondern umfasst vor allem auch Zweikomponenten-Systeme, bei denen eine 0,1 - 1 mm dünne phototrope Thiourethan-Funktionsschicht auf einem Polymer-Grundkörper anpolymerisiert ist (Anguss-Verfahren). Die Erfindung umfasst aber auch Sandwich-Systeme, bei denen sich eine 0,1 - 1 mm dünne phototrope Thiourethan-Funktionsschicht zwischen zwei Polymer-Körpern befindet.

Ein weiterer Gegenstand der vorliegenden Erfindung betrifft die Verwendung der erfindungsgemäßen Kombination annellierter Naphthopyran-Isomere zur Einbringung in Thiourethan-Polymere, insbesondere für ophthalmische Zwecke, in Linsen und Gläsern für Brillen aller Art, wie beispielsweise Korrektionsbrillen, Autofahrer-Brillen, Skibrillen, Sonnenbrillen, Motorradbrillen, für Visiere von Schutzhelmen und dergleichen und für Sonnenschutz-Zwecke in Fahrzeugen und im Baubereich, in Form von Fenstern, Schutzblenden, Abdeckungen, Dächern und dergleichen.

Noch ein weiterer Gegenstand der vorliegenden Erfindung betrifft die neuartigen photochromen annellierten Naphthopyrane gemäß der nachfolgenden allgemeinen Formel (II) :

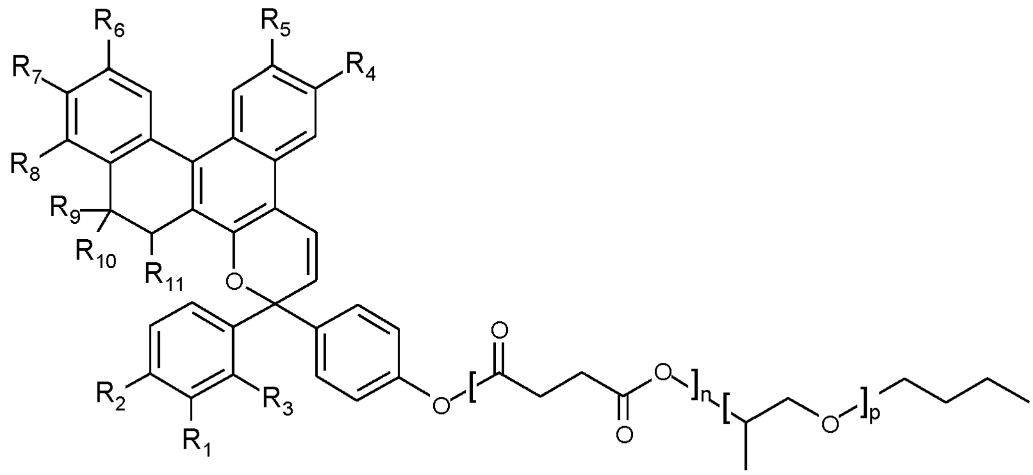

(II)

wobei

n eine ganze Zahl zwischen 0 und 1 darstellt und p eine ganze Zahl zwischen 10 und 50 darstellt;

die Reste $R_1$, $R_2$ und $R_3$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Diphenylamino-Rest, einem (4-Methoxyphenyl)-phenylamino-Rest, einem Bis(4-methoxyphenyl)amino-Rest, einem (4-Ethoxyphenyl)-phenylamino-Rest, einem Bis(4-Ethoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11-Dihydro-dibenz[b,f]azepinyl-Rest;

oder die Reste $R_1$ und $R_2$ zusammen die Gruppierung $-V-(CH_2)_m-W-$ darstellen, wobei V und W unabhängig voneinander aus den Gruppierungen -O-, -S-, $-NC_6H_5-$, $-CH_2-$, $-C(CH_3)_2-$, $-C(C_2H_5)_2-$ oder $-C(C_6H_5)_2-$ ausgewählt sind; m dabei eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass V oder W, wenn diese $-CH_2-$ darstellen, zusammen mit der jeweils benachbarten $CH_2$-Gruppe auch einen annellierten Benzol-Ring darstellen können;

die Reste $R_4$ und $R_5$ jeweils unabhängig voneinander einen Substituenten darstellen, ausgewählt aus Wasserstoff, Fluor, einem ($C_1$-$C_6$)-Alkyl-Rest, einem ($C_1$-$C_6$)-AlkoxyRest, einem Phenyl-Rest, einem Phenoxy-Rest, einem Benzyl-Rest oder einem Benzyloxy-Rest;

die Reste $R_6$, $R_7$ und $R_8$ jeweils unabhängig voneinander einen Substituenten darstellen, ausgewählt aus Wasserstoff, einem ($C_1$-$C_6$)-Alkyl-Rest, einem ($C_3$-$C_7$)-CycloalkylRest, einem ($C_1$-$C_6$)-Alkoxy-Rest, einem Phenyl-Rest oder einem Benzyl-Rest;

oder die Reste $R_6$ und $R_7$ zusammen oder $R_7$ und $R_8$ zusammen einen annellierten Benzol-Ring bilden, der un-, mono- oder disubstituiert sein kann, wobei die Substituenten ausgewählt sein können aus Wasserstoff, einem ($C_1$-$C_6$)-Alkyl-Rest, einem ($C_1$-$C_6$)-Alkoxy-Rest, einem Phenyl-Rest oder einem Benzyl-Rest;

oder die Reste $R_6$ und $R_7$ zusammen oder $R_7$ und $R_8$ zusammen ein annelliertes Naphthalin-Ringsystem, ein annelliertes Benzofuran-Ringsystem, ein annelliertes Benzothiophen-Ringsystem, ein annelliertes 3,3-Dimethylinden-Ringsystem oder ein annelliertes 2H-Chromen-Ringsystem bilden;

die Reste $R_9$, $R_{10}$ und $R_{11}$ jeweils unabhängig voneinander einen Substituenten darstellen, ausgewählt aus einem ($C_1$-$C_6$)-Alkyl-Rest oder einem Phenyl-Rest.

Was bevorzugte Ausführungsformen dieser neuartigen photochromen annellierten Naphthopyrane gemäß der allgemeinen Formel (II) betrifft, so gilt das bereits vorstehend Ausgeführte.

**Patentansprüche**

1. Kombination von zwei unterschiedlichen, photochromen annellierten Naphthopyranen gemäß den nachfolgenden allgemeinen Formeln (I) und (II):

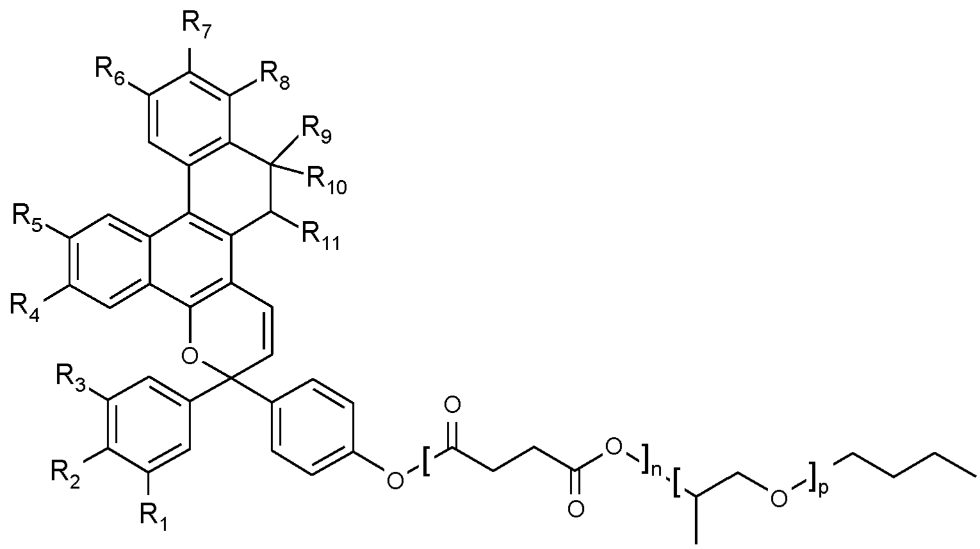

(I)

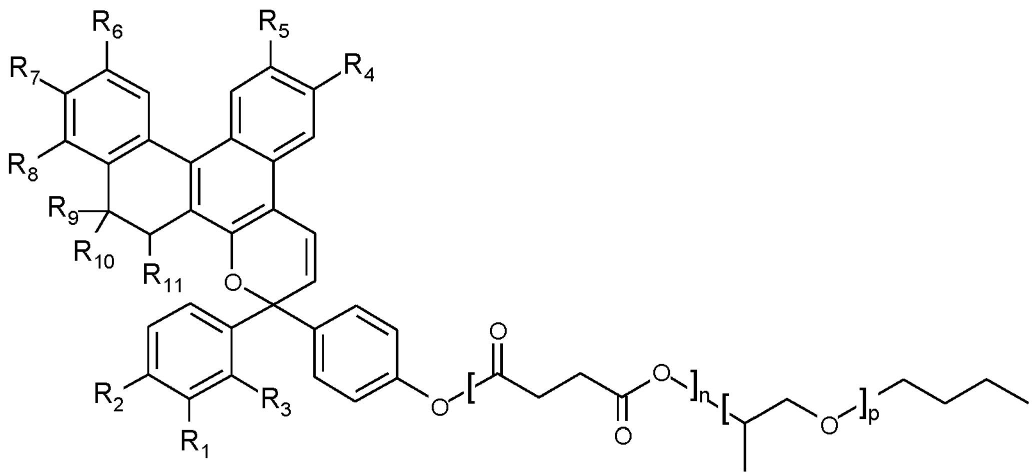

(II)

wobei in den Formeln (I) bzw. (II)

n eine ganze Zahl zwischen 0 und 1 darstellt und p eine ganze Zahl zwischen 10 und 50 darstellt;

die Reste $R_1$, $R_2$ und $R_3$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Diphenylamino-Rest, einem (4-Methoxyphenyl)-phenylamino-Rest, einem Bis(4-methoxyphenyl)amino-Rest, einem (4-Ethoxyphenyl)-phenylamino-Rest, einem Bis(4-Ethoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11-Dihydro-di-benz[b,f]azepinyl-Rest;

oder die Reste $R_1$ und $R_2$ zusammen die Gruppierung $-V-(CH_2)_m-W-$ darstellen, wobei V und W unabhängig voneinander aus den Gruppierungen -O-, -S-, $-NC_6H_5-$, $-CH_2-$, $-C(CH_3)_2-$, $-C(C_2H_5)_2-$ oder $-C(C_6H_5)_2-$ ausgewählt sind; m dabei eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass V oder W, wenn diese $-CH_2-$ darstellen, zusammen mit der jeweils benachbarten $CH_2$-Gruppe auch einen annellierten Benzol-Ring darstellen können;

die Reste $R_4$ und $R_5$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem Phenoxy-Rest, einem Benzyl-Rest oder einem Benzyloxy-Rest;

oder die Reste $R_4$ und $R_5$ zusammen die Gruppierung $-X-(CH_2)_q-Y-$ darstellen, wobei X und Y unabhängig voneinander aus den Gruppierungen -O-, -S-, $-NC_6H_5-$, $-CH_2-$, $-C(CH_3)_2-$, $-C(C_2H_5)_2-$ oder $-C(C_6H_5)_2-$ ausgewählt sind; q dabei eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass X oder Y, wenn diese $-CH_2-$ darstellen, zusammen mit der jeweils benachbarten $CH_2$-Gruppe auch einen annellierten Benzol-Ring darstellen können;

die Reste $R_6$, $R_7$ und $R_8$ jeweils unabhängig voneinander einen Substituenten darstellen, ausgewählt aus Wasserstoff, einem ($C_1$-$C_6$)-Alkyl-Rest, einem ($C_3$-$C_7$)-CycloalkylRest, einem ($C_1$-$C_6$)-Alkoxy-Rest, einem Phenyl-Rest oder einem Benzyl-Rest;

oder die Reste $R_6$ und $R_7$ zusammen oder $R_7$ und $R_8$ zusammen einen annellierten Benzol-Ring bilden, der un-, mono- oder disubstituiert sein kann, wobei die Substituenten ausgewählt sein können aus Wasserstoff, einem ($C_1$-$C_6$)-Alkyl-Rest, einem ($C_1$-$C_6$)-Alkoxy-Rest, einem Phenyl-Rest oder einem Benzyl-Rest;

oder die Reste $R_6$ und $R_7$ zusammen oder $R_7$ und $R_8$ zusammen ein annelliertes Naphthalin-Ringsystem, ein annelliertes Benzofuran-Ringsystem, ein annelliertes Benzothiophen-Ringsystem, ein annelliertes 3,3-Dimethylinden-Ringsystem oder ein annelliertes 2H-Chromen-Ringsystem bilden;

die Reste $R_9$, $R_{10}$ und $R_{11}$ jeweils unabhängig voneinander einen Substituenten darstellen, ausgewählt aus

einem ($C_1$-$C_6$)-Alkyl-Rest oder einem Phenyl-Rest.

**2.** Kombination gemäß Anspruch 1, wobei in den Formeln (I) bzw. (II) die Reste $R_1$, $R_2$ und $R_3$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Diphenylamino-Rest, einem (4-Methoxyphenyl)-phenylamino-Rest, einem Bis(4-methoxyphenyl)amino-Rest, einem (4-Ethoxyphenyl)-phenylamino-Rest, einem Bis(4-Ethoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11-Dihydro-dibenz[b,f]azepinyl-Rest;

die Reste $R_4$ und $R_5$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem Phenoxy-Rest, einem Benzyl-Rest oder einem Benzyloxy-Rest;
die Reste $R_6$, $R_7$ und $R_8$ jeweils unabhängig voneinander einen Substituenten darstellen, ausgewählt aus Wasserstoff, einem ($C_1$-$C_6$)-Alkyl-Rest, einem ($C_3$-$C_7$)-CycloalkylRest, einem ($C_1$-$C_6$)-Alkoxy-Rest, einem Phenyl-Rest oder einem Benzyl-Rest; und
die Reste $R_9$, $R_{10}$ und $R_{11}$ jeweils unabhängig voneinander einen Substituenten darstellen, ausgewählt aus einem ($C_1$-$C_6$)-Alkyl-Rest oder einem Phenyl-Rest.

**3.** Kombination nach Anspruch 1 oder 2, weiter umfassend einen oder mehrere weitere Bestandteile, ausgewählt aus photochromen Farbstoffen, verschieden von solchen der Formeln (I) und (II), Permanentfarbstoffen oder Additiven.

**4.** Kombination gemäß einem der Ansprüche 1 bis 3, wobei in den Formeln (I) bzw. (II) die Reste $R_9$, $R_{10}$ und $R_{11}$ jeweils unabhängig voneinander einen Substituenten darstellen, ausgewählt aus einem ($C_1$-$C_6$)-Alkyl-Rest, vorzugsweise die Reste $R_9$, $R_{10}$ und $R_{11}$ jeweils Methyl darstellen.

**5.** Verwendung der Kombination gemäß einem der Ansprüche 1 bis 4 zur Einbringung in Thiourethan-Polymere, insbesondere für ophthalmische Zwecke, in Linsen und Gläsern für Brillen aller Art, wie beispielsweise Korrektionsbrillen, Autofahrer-Brillen, Skibrillen, Sonnenbrillen, Motorradbrillen, für Visiere von Schutzhelmen und dergleichen und für Sonnenschutz-Zwecke in Fahrzeugen und im Baubereich, in Form von Fenstern, Schutzblenden, Abdeckungen, Dächern und dergleichen.

**6.** Phototrope Thiourethan-Polymere, umfassend die Kombination gemäß einem der Ansprüche 1 bis 4.

**7.** Phototropes Produkt auf Basis eines Thiourethan-Polymers gemäß Anspruch 6, welches ein Zweikomponenten-System ist, bei dem eine 0,1 - 1 mm dünne phototrope Thiourethan-Funktionsschicht auf Basis des Thiourethan-Polymers auf einem Polymer-Grundkörper anpolymerisiert ist, oder ein Sandwich-System ist, bei dem eine 0,1 - 1 mm dünne phototrope Thiourethan-Funktionsschicht auf Basis des Thiourethan-Polymers zwischen zwei Polymer-Körpern angeordnet ist.

**8.** Photochrome annellierte Naphthopyrane gemäß der nachfolgenden allgemeinen Formel (II):

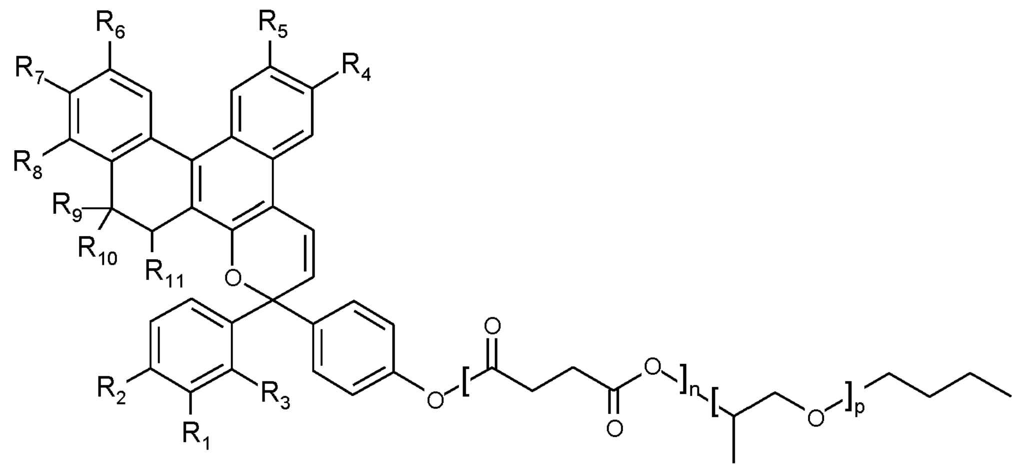

(II)

wobei

n eine ganze Zahl zwischen 0 und 1 darstellt und p eine ganze Zahl zwischen 10 und 50 darstellt;
die Reste $R_1$, $R_2$ und $R_3$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Diphenylamino-Rest, einem (4-Methoxyphenyl)-phenylamino-Rest, einem Bis(4-methoxyphenyl)amino-Rest, einem (4-Ethoxyphenyl)-phenylamino-Rest, einem Bis(4-Ethoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11-Dihydro-di-benz[b,f]azepinyl-Rest;
oder die Reste $R_1$ und $R_2$ zusammen die Gruppierung $-V-(CH_2)_m-W-$ darstellen, wobei V und W unabhängig voneinander aus den Gruppierungen -O-, -S-, $-NC_6H_5-$, $-CH_2-$, $-C(CH_3)_2-$, $-C(C_2H_5)_2-$ oder $-C(C_6H_5)_2-$ ausgewählt sind; m dabei eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass V oder W, wenn diese $-CH_2-$ darstellen, zusammen mit der jeweils benachbarten $CH_2$-Gruppe auch einen annellierten Benzol-Ring darstellen können;
die Reste $R_4$ und $R_5$ jeweils unabhängig voneinander einen Substituenten darstellen, ausgewählt aus Wasserstoff, Fluor, einem ($C_1$-$C_6$)-Alkyl-Rest, einem ($C_1$-$C_6$)-AlkoxyRest, einem Phenyl-Rest, einem Phenoxy-Rest, einem Benzyl-Rest oder einem Benzyloxy-Rest;
die Reste $R_6$, $R_7$ und $R_8$ jeweils unabhängig voneinander einen Substituenten darstellen, ausgewählt aus Wasserstoff, einem ($C_1$-$C_6$)-Alkyl-Rest, einem ($C_3$-$C_7$)-CycloalkylRest, einem ($C_1$-$C_6$)-Alkoxy-Rest, einem Phenyl-Rest oder einem Benzyl-Rest;
oder die Reste $R_6$ und $R_7$ zusammen oder $R_7$ und $R_8$ zusammen einen annellierten Benzol-Ring bilden, der un-, mono- oder disubstituiert sein kann, wobei die Substituenten ausgewählt sein können aus Wasserstoff, einem ($C_1$-$C_6$)-Alkyl-Rest, einem ($C_1$-$C_6$)-Alkoxy-Rest, einem Phenyl-Rest oder einem Benzyl-Rest;
oder die Reste $R_6$ und $R_7$ zusammen oder $R_7$ und $R_8$ zusammen ein annelliertes Naphthalin-Ringsystem, ein annelliertes Benzofuran-Ringsystem, ein annelliertes Benzothiophen-Ringsystem, ein annelliertes 3,3-Dimethylinden-Ringsystem oder ein annelliertes 2H-Chromen-Ringsystem bilden;
die Reste $R_9$, $R_{10}$ und $R_{11}$ jeweils unabhängig voneinander einen Substituenten darstellen, ausgewählt aus einem ($C_1$-$C_6$)-Alkyl-Rest oder einem Phenyl-Rest.

## Claims

1. Combination of two different photochromic anellated naphthopyrans according to the following general formulae (I) and (II):

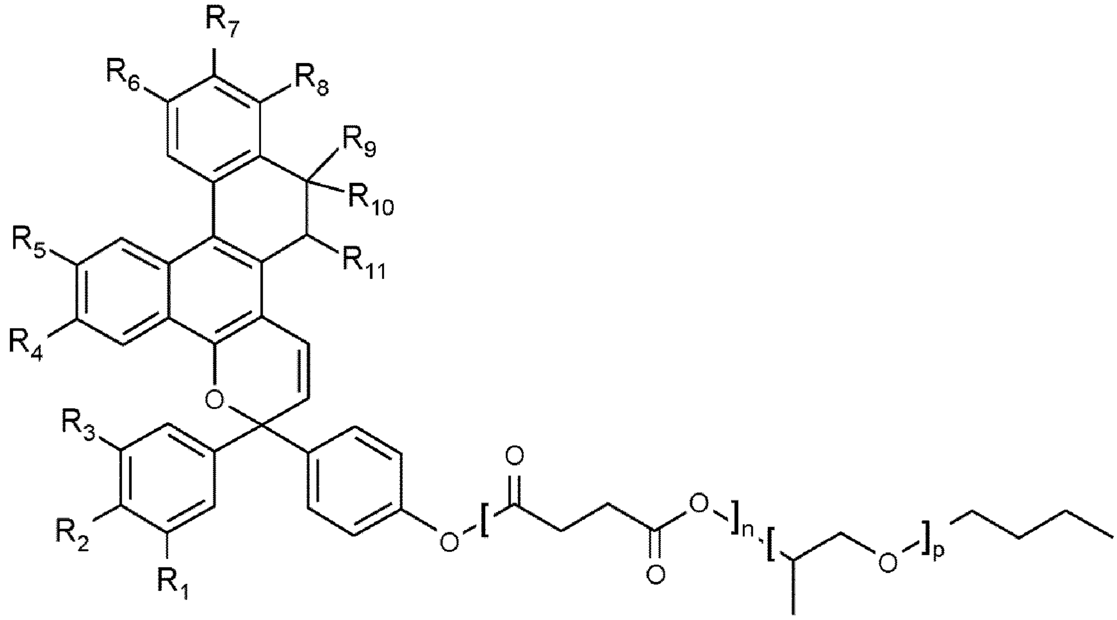

(I)

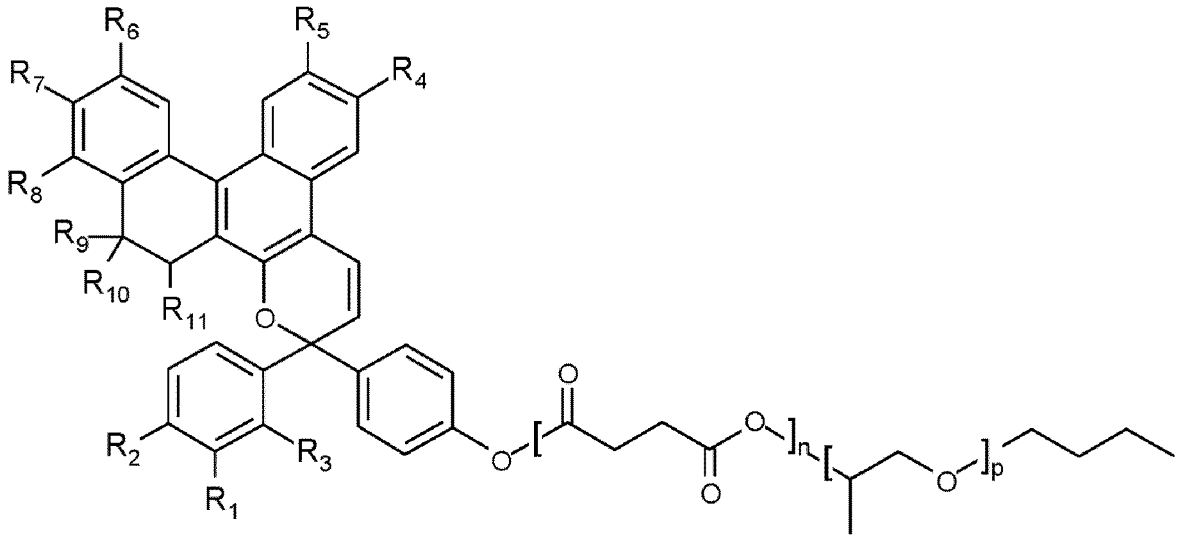

(II)

wherein in formulae (I) and (II), respectively

n represents an integer between 0 and 1 and p represents an integer between 10 and 50;

the radicals $R_1$ $R_2$ and $R_3$ each independently of one another represent a substituent selected from hydrogen, bromine, chlorine, fluorine, a ($C_1$-$C_6$)-alkyl radical, a ($C_3$-$C_7$)-cycloalkyl radical, a ($C_1$-$C_6$)-thioalkyl radical, a ($C_1$-$C_6$)-alkoxy radical a trifluoromethyl radical, a phenyl radical, a 4-methoxyphenyl radical, a phenoxy radical, a 4-methoxyphenoxy radical, a benzyl radical, a 4-methoxybenzyl radical, a benzyloxy radical, a 4-methoxybenzyloxy radical, a biphenyl radical a biphenyloxy radical, a naphthyl radical, a naphthoxy radical, a diphenylamino radical, a (4-methoxyphenyl)-phenylamino radical, a bis(4-methoxyphenyl)amino radical, a (4-ethoxyphenyl)-phenylamino radical, a bis(4-ethoxyphenyl)amino radical, a 10,10-dimethyl-9,10-dihydroacridine radical, a phenothiazinyl radical, a phenoxazinyl radical, a phenazinyl radical, a carbazolyl radical, a 1,2,3,4-tetrahydrocarbazolyl radical or a 10,11 -dihydro-dibenz[b,f]azepinyl radical;

or the radicals $R_1$ and $R_2$ together represent the grouping -V-$(CH_2)_m$-W- where V and W are selected independently of one another from the groupings -O-, -S-, $-NC_6H_5-$, $-CH_2-$, $-C(CH_3)_2-$, $-C(C_2H_5)_2-$ or $-C(C_6H_5)_2-$; m represents an integer from 1 to 3; with the proviso that, if this numerical value is 2 or 3, a benzene ring may also be fused to two adjacent $CH_2$ groups; and with the further proviso that V or W, if these represent $-CH_2-$, together with the respective adjacent $CH_2$ group may also represent a fused benzene ring;

the radicals $R_4$ and $R_5$ each independently of one another represent a substituent selected from hydrogen, bromine, chlorine, fluorine, a $(C_1-C_6)$-alkyl radical, a $(C_3-C_7)$-cycloalkyl radical, a $(C_1-C_6)$-thioalkyl radical, a $(C_1-C_6)$-alkoxy radical, a trifluoromethyl radical, a phenyl radical, a phenoxy radical, a benzyl radical or a benzyloxy radical;

or the radicals $R_4$ and $R_5$ together represent the grouping $-X-(CH_2)_q-Y-$, where X and Y are selected independently of one another from the groupings -O-, -S-, $-NC_6H_5-$, $-CH_2-$, $-C(CH_3)_2-$, $-C(C_2H_5)_2-$ or $-C(C_6H_5)_2-$; q represents an integer from 1 to 3; with the proviso that, if this numerical value is 2 or 3, a benzene ring may also be fused to two neighbouring $CH_2$ groups; and with the further proviso that X or Y, if these represent $-CH_2-$, together with the respective neighbouring $CH_2$ group may also represent a fused benzene ring;

the radicals $R_6$, $R_7$ and $R_5$ each independently of one another represent a substituent selected from hydrogen, a $(C_1-C_6)$-alkyl radical, a $(C_3-C_7)$-cycloalkyl radical, a $(C_1-C_6)$- alkoxy radical, a phenyl radical or a benzyl radical;

or the radicals $R_6$ and $R_7$ together or $R_7$ and $R_8$ together form a fused benzene ring which may be unsubstituted, mono- or disubstituted, where the substituents may be selected from hydrogen, a $(C_1-C_6)$-alkyl radical, a $(C_1-C_6)$-alkoxy radical, a phenyl radical or a benzyl radical;

or the radicals $R_6$ and $R_7$ together or $R_7$ and $R_8$ together form a fused naphthalene ring system, a fused benzofuran ring system, a fused benzothiophene ring system, a fused 3,3-dimethylindene ring system or a fused 2H-chromene ring system;

the radicals $R_9$, $R_{10}$ and $R_{11}$ each independently represent a substituent selected from a $(C_1-C_6)$- alkyl radical or a phenyl radical.

**2.** Combination according to claim 1, wherein in the formulae (I) or (II)

the radicalsR$_1$, $R_2$ and $R_3$ each independently of one another represent a substituent selected from hydrogen, bromine, chlorine, fluorine, a $(C_1-C_6)$-alkyl radical, a $(C_3-C_7)$-cycloalkyl radical, a $(C_1-C_6)$-thioalkyl radical, a $(C_1-C_6)$-alkoxy radical a trifluoromethyl radical, a phenyl radical, a 4-methoxyphenyl radical, a phenoxy radical, a 4-methoxyphenoxy radical, a benzyl radical, a 4-methoxybenzyl radical, a benzyloxy radical, a 4-methoxybenzyloxy radical, a biphenyl radical a biphenyloxy radical, a naphthyl radical, a naphthoxy radical, a diphenylamino radical, a (4-methoxyphenyl)-phenylamino radical, a bis(4-methoxyphenyl)amino radical, a (4-ethoxyphenyl)-phenylamino radical, a bis(4-ethoxyphenyl)amino radical, a 10,10-dimethyl-9,10-dihydroacridine radical, a phenothiazinyl radical, a phenoxazinyl radical, a phenazinyl radical, a carbazolyl radical, a 1 ,2,3,4-tetrahydrocarbazolyl radical or a 10,11 -dihydro- dibenz[b,f]azepinyl radical;

the radicals $R_4$ and $R_5$ each independently represent a substituent selected from hydrogen, bromine, chlorine, fluorine, a $(C_1-C_6)$-alkyl radical, a $(C_3-C_7)$-cycloalkyl radical, a $(C_1-C_6)$-thioalkyl radical, a $(C_1-C_6)$-alkoxy radical, a trifluoromethyl radical, a phenyl radical, a phenoxy radical, a benzyl radical or a benzyloxy radical;

the radicals $R_6$, $R_7$ and $R_8$ each independently of one another represent a substituent selected from hydrogen, a $(C_1-C_6)$-alkyl radical, a $(C_3-C_7)$-cycloalkyl radical, a $(C_1-C_6)$-alkoxy radical, a phenyl radical or a benzyl radical; and

the radicals $R_9$, $R_{10}$ and $R_{11}$ each independently of one another represent a substituent selected from a $(C_1-C_6)$-alkyl radical or a phenyl radical.

**3.** Combination according to claim 1 or 2, further comprising one or more further constituents selected from photochromic dyes different from those of formulae (I) and (II), permanent dyes or additives.

**4.** Combination according to one of claims 1 to 3, wherein in formulae (I) or (II) the radicals $R_9$, $R_{10}$ and $R_{11}$ each independently represent a substituent selected from a $(C_1-C_6)$-alkyl radical, preferably the radicals $R_9$, $R_{10}$ and $R_{11}$ each represent methyl.

**5.** Use of the combination according to any one of claims 1 to 4 for incorporation into thiourethane polymers, in particular for ophthalmic purposes, in lenses and glasses for spectacles of all kinds, such as prescription spectacles, driving spectacles, ski goggles, sunglasses, motorbike goggles, for visors of safety helmets and the like and for sun protection purposes in vehicles and in the building sector, in the form of windows, protective screens, covers, roofs and the like.

**6.** Phototropic thiourethane polymers comprising the combination according to any one of claims 1 to 4.

**7.** Phototropic product based on a thiourethane polymer according to claim 6, which is a two-component system in which a 0.1 - 1 mm thin phototropic thiourethane functional layer based on the thiourethane polymer is polymerised onto a polymer base body, or a sandwich system in which a 0.1 - 1 mm thin phototropic thiourethane functional layer based on the thiourethane polymer is arranged between two polymer bodies.

**8.** Photochromic anellated naphthopyrans according to the following general formula (II):

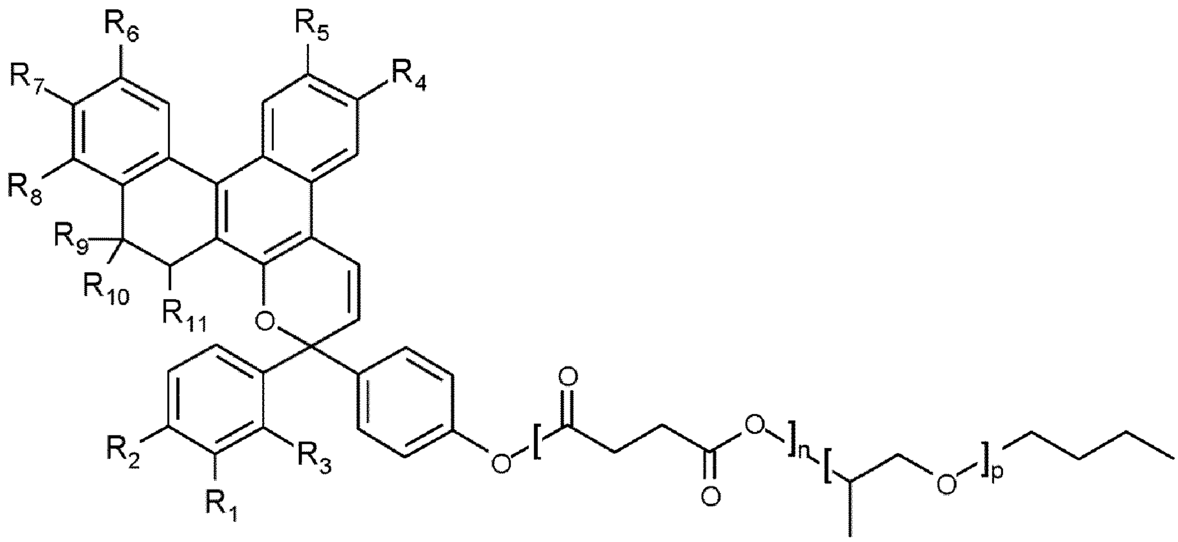

(II)

wherein

n represents an integer between 0 and 1 and p represents an integer between 10 and 50;
the radicals $R_1$, $R_2$ and $R_3$ each independently of one another represent a substituent selected from hydrogen, bromine, chlorine, fluorine, a ($C_1$-$C_6$)-alkyl radical, a ($C_3$-$C_7$)-cycloalkyl radical, a ($C_1$-$C_6$)-thioalkyl radical, a ($C_1$-$C_6$)-alkoxy radical a trifluoromethyl radical, a phenyl radical, a 4-methoxyphenyl radical, a phenoxy radical, a 4-methoxyphenoxy radical, a benzyl radical, a 4-methoxybenzyl radical, a benzyloxy radical, a 4-methoxybenzyloxy radical, a biphenyl radical a biphenyloxy radical, a naphthyl radical, a naphthoxy radical, a diphenylamino radical, a (4-methoxyphenyl)-phenylamino radical, a bis(4-methoxyphenyl)amino radical, a (4-ethoxyphenyl)-phenylamino radical, a bis(4-ethoxyphenyl)amino radical, a 10,10-dimethyl-9,10-dihydroacridine radical, a phenothiazinyl radical, a phenoxazinyl radical, a phenazinyl radical, a carbazolyl radical, a 1,2,3,4-tetrahydrocarbazolyl radical or a 10,11 -dihydro-dibenz[b,f]azepinyl radical;
or the radicals $R_1$ and $R_2$ together represent the grouping $-V-(CH_2)_m-W-$ where V and W are selected independently of one another from the groupings -O-, -S-, $-NC_6H_5-$, $-CH_2-$, $-C(CH_3)_2-$, $-C(C_2H_5)_2-$ r $-C(C_6H_5)_2-$; m represents an integer from 1 to 3; with the proviso that, if this numerical value is 2 or 3, a benzene ring may also be fused to two adjacent $CH_2$ groups; and with the further proviso that V or W, if these represent $-CH_2-$, together with the respective adjacent $CH_2$ group may also represent a fused benzene ring;
the radicals $R_4$ and $R_5$ each independently of one another represent a substituent selected from hydrogen, fluorine, a ($C_1$-$C_6$)-alkyl radical, a ($C_1$-$C_6$)-alkoxy radical, a phenyl radical, a phenoxy radical, a benzyl radical or a benzyloxy radical;
the radicals $R_6$, $R_7$ and $R_5$ each independently of one another represent a substituent selected from hydrogen, a ($C_1$-$C_6$)-alkyl radical, a ($C_3$-$C_7$)-cycloalkyl radical, a ($C_1$-$C_6$)- alkoxy radical, a phenyl radical or a benzyl radical;
or the radicals $R_6$ and $R_7$ together or $R_7$ and $R_8$ together form a fused benzene ring which may be unsubstituted, mono- or disubstituted, where the substituents may be selected from hydrogen, a ($C_1$-$C_6$)-alkyl radical, a ($C_1$-$C_6$)-alkoxy radical, a phenyl radical or a benzyl radical;
or the radicals $R_6$ and $R_7$ together or $R_7$ and $R_8$ together form a fused naphthalene ring system, a fused benzofuran ring system, a fused benzothiophene ring system, a fused 3,3-dimethylindene ring system or a fused 2H-chromene ring system;
the radicals $R_9$, $R_{10}$ and $R_{11}$ each independently represent a substituent selected from a ($C_1$-$C_6$)- alkyl radical or a phenyl radical.

## Revendications

**1.** Combinaison de deux naphtopyrans anélés photochromiques différents selon les formules générales suivantes (I) et (II):

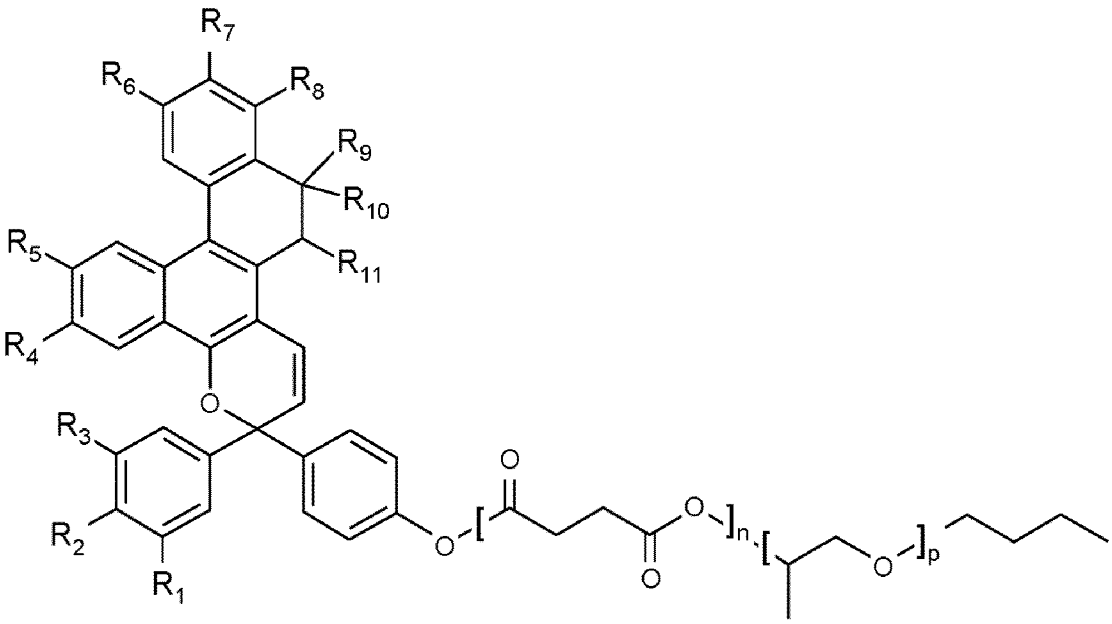

(I)

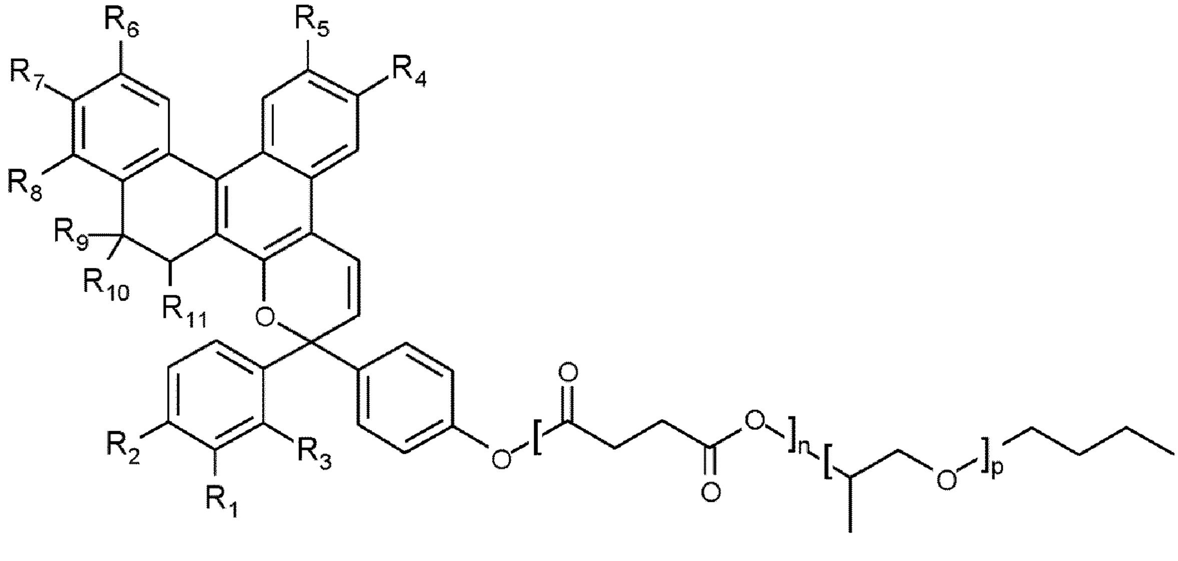

(II)

où dans les formules (I) et (II), respectivement

n représente un nombre entier compris entre 0 et 1 et p représente un nombre entier compris entre 10 et 50 ; les radicaux $R_1$ $R_2$ et $R_3$ représentent chacun indépendamment l'un de l'autre un substituant choisi parmi l'hydrogène, le brome, le chlore, le fluor, un radical alkyle en ($C_1$-$C_6$), un radical cycloalkyle en ($C_3$-$C_7$), un radical thioalkyle en ($C_1$-$C_6$), un radical ($C_1$-$C_6$)-alkoxy un radical trifluorométhyle, un radical phényle, un radical 4-méthoxyphényle, un radical phénoxy, un radical 4-méthoxyphénoxy, un radical benzyle, un radical 4-méthoxybenzyle, un radical benzyloxy, un radical 4-méthoxybenzyloxy, un radical biphényle, un radical biphényloxy,

un radical naphtyle, un radical naphtoxy, un radical diphénylamino, un radical (4-méthoxyphényl)-phénylamino, un radical bis(4-méthoxyphényl)amino, un radical (4-éthoxyphényl)-phénylamino, un radical bis(4-éthoxyphényl)amino, un radical 10,10-diméthyl-9,10-dihydroacridine, un radical phénothiazinyle, un radical phénoxazinyle, un radical phénazinyle, un radical carbazolyle, un radical 1,2,3,4-tétrahydrocarbazolyle ou un radical 10,11-dihydrodibenz[b,f]azépinyle ;

soit les radicaux $R_1$ et $R_2$ représentent ensemble le groupement $-V-(CH_2)_m-W-$ où V et W sont choisis indépendamment l'un de l'autre parmi les groupements -O-, -S-, $-NC_6H_5-$, $-CH_2-$, - $C(CH_3)_2-$, $-C(C_2H_5)_2-$ or $-C(C_6H_5)_2-$; m représente un nombre entier de 1 à 3 ; sous réserve que, si cette valeur numérique est 2 ou 3, un cycle benzénique peut également être fusionné à deux groupes $CH_2$ adjacents ; et sous réserve également que V ou W, s'ils représentent - $CH_2-$, ainsi que le groupe $CH_2$ adjacent respectif, peuvent également représenter un cycle benzénique fusionné ;

les radicaux $R_4$ et $R_5$ représentent chacun indépendamment l'un de l'autre un substituant choisi parmi l'hydrogène, le brome, le chlore, le fluor, un radical alkyle en ($C_1$-$C_6$), un radical cycloalkyle en ($C_3$-$C_7$), un radical thioalkyle en ($C_1$-$C_6$), un radical alcoxy en ($C_1$-$C_6$), un radical trifluorométhyle, un radical phényle, un radical phénoxy, un radical benzyle ou un radical benzyloxy ;

soit les radicaux $R_4$ et $R_5$ représentent ensemble le groupement $-X-(CH_2)_q-Y-$, où X et Y sont choisis indépendamment l'un de l'autre parmi les groupements -O-, -S-, $-NC_6H_5-$, $-CH_2-$, - $C(CH_3)_2-$, $-C(C_2H_5)_2-$ or $-C(C_6H_5)_2-$; q représente un nombre entier compris entre 1 et 3 ; sous réserve que, si cette valeur numérique est 2 ou 3, un cycle benzénique peut également être fusionné à deux groupes $CH_2$ voisins ; et sous réserve également que X ou Y, s'ils représentent $-CH_2-$, ainsi que le groupe $CH_2$ voisin respectif, peuvent également représenter un cycle benzénique fusionné ;

les radicaux $R_6$, $R_7$ et $R_8$ représentent chacun indépendamment l'un de l'autre un substituant choisi parmi l'hydrogène, un radical alkyle ($C_1$-$C_6$), un radical cycloalkyle ($C_3$-$C_7$), un radical alcoxy ($C_1$-$C_6$), un radical phényle ou un radical benzyle ;

soit les radicaux $R_6$ et $R_7$ ensemble ou $R_7$ et $R_8$ ensemble forment un cycle benzénique fusionné qui peut être non substitué, mono- ou disubstitué, les substituants pouvant être choisis parmi l'hydrogène, un radical alkyle ($C_1$-$C_6$), un radical alcoxy ($C_1$-$C_6$), un radical phényle ou un radical benzyle ;

soit les radicaux $R_6$ et $R_7$ ensemble ou $R_7$ et $R_8$ ensemble forment un système cyclique naphtalène condensé, un système cyclique benzofurane condensé, un système cyclique benzothiophène condensé, un système cyclique 3,3-diméthylidène condensé ou un système cyclique 2H-chromène condensé ;

les radicaux $R_9$, $R_{10}$ et $R_{11}$ représentent chacun indépendamment un substituant choisi parmi un radical alkyle ($C_1$-$C_6$) ou un radical phényle.

**2.** Combinaison selon la revendication 1, dans laquelle dans les formules (I) ou (II)

les radicaux $R_1$, $R_2$ et $R_3$ représentent chacun indépendamment l'un de l'autre un substituant choisi parmi l'hydrogène, le brome, le chlore, le fluor, un radical alkyle en ($C_1$-$C_6$), un radical cycloalkyle en ($C_3$-$C_7$), un radical thioalkyle en ($C_1$-$C_6$), un radical alcoxy en ($C_1$-$C_6$), un radical trifluorométhyle, un radical phényle, un radical 4-méthylphényle, un radical (C1-C6)-alkoxy un radical trifluorométhyle, un radical phényle, un radical 4-méthoxyphényle, un radical phénoxy, un radical 4-méthoxyphénoxy, un radical benzyle, un radical 4-méthoxybenzyle, un radical benzyloxy, un radical 4-méthoxybenzyloxy, un radical biphényle, un radical biphényloxy, un radical naphtyle, un radical naphtoxy, un radical diphénylamino, un radical (4-méthoxyphényl)-phénylamino, un radical bis(4-méthoxyphényl)amino, un radical (4-éthoxyphényl)-phénylamino, un radical bis(4-éthoxyphényl)amino, un radical 10,10-diméthyl-9,10-dihydroacridine, un radical phénothiazinyle, un radical phénoxazinyle, un radical phénazinyle, un radical carbazolyle, un radical 1 ,2,3,4-tétrahydrocarbazolyle ou un radical 10,11-dihydro- dibenz[b,f]azépinyle ;

les radicaux $R_4$ et $R_5$ représentent chacun indépendamment un substituant choisi parmi l'hydrogène, le brome, le chlore, le fluor, un radical ($C_1$-$C_6$) alkyle, un radical ($C_3$-$C_7$) cycloalkyle, un radical ($C_1$-$C_6$) thioalkyle, un radical ($C_1$-$C_6$) alcoxy, un radical trifluorométhyle, un radical phényle, un radical phénoxy, un radical benzyle ou un radical benzyloxy ;

les radicaux $R_6$, $R_7$ et $R_8$ représentent chacun indépendamment l'un de l'autre un substituant choisi parmi l'hydrogène, un radical alkyle ($C_1$-$C_6$), un radical cycloalkyle ($C_3$-$C_7$), un radical alcoxy ($C_1$-$C_6$), un radical phényle ou un radical benzyle ; et

les radicaux $R_9$, $R_{10}$ et $R_{11}$ représentent chacun indépendamment l'un de l'autre un substituant choisi parmi un radical ($C_1$-$C_6$) alkyle ou un radical phényle.

**3.** Combinaison selon la revendication 1 ou 2, comprenant en outre un ou plusieurs autres constituants choisis parmi les colorants photochromiques différents de ceux des formules (I) et (II), les colorants permanents ou les additifs.

**4.** Combinaison selon l'une des revendications 1 à 3, dans laquelle, dans les formules (I) ou (II), les radicaux $R_9$, $R_{10}$ et $R_{11}$ représentent chacun indépendamment un substituant choisi parmi les radicaux ($C_1$-$C_6$)-alkyles, de préférence les radicaux $R_9$, $R_{10}$ et $R_{11}$ représentent chacun le méthyle.

**5.** Utilisation de la combinaison selon l'une quelconque des revendications 1 à 4 pour l'incorporation dans des polymères thiouréthaniques, notamment à des fins ophtalmiques, dans des lentilles et verres de lunettes de toutes sortes, telles que lunettes de vue, lunettes de conduite, masques de ski, lunettes de soleil, lunettes de moto, pour visières de casques de sécurité et similaires et à des fins de protection solaire dans les véhicules et dans le secteur du bâtiment, sous forme de fenêtres, d'écrans de protection, de couvertures, de toits et similaires.

**6.** Polymères de thiouréthane phototropes comprenant la combinaison selon l'une quelconque des revendications 1 à 4.

**7.** Produit phototropique à base d'un polymère de thiouréthane selon la revendication 6, qui est un système à deux composants dans lequel une couche fonctionnelle phototropique de thiouréthane d'une épaisseur de 0,1 à 1 mm à base du polymère de thiouréthane est polymérisée sur un corps de base polymère, ou un système sandwich dans lequel une couche fonctionnelle phototropique de thiouréthane d'une épaisseur de 0,1 à 1 mm à base du polymère de thiouréthane est disposée entre deux corps de polymères.

**8.** Naphtopyrans anéliques photochromiques répondant à la formule générale suivante (II) :

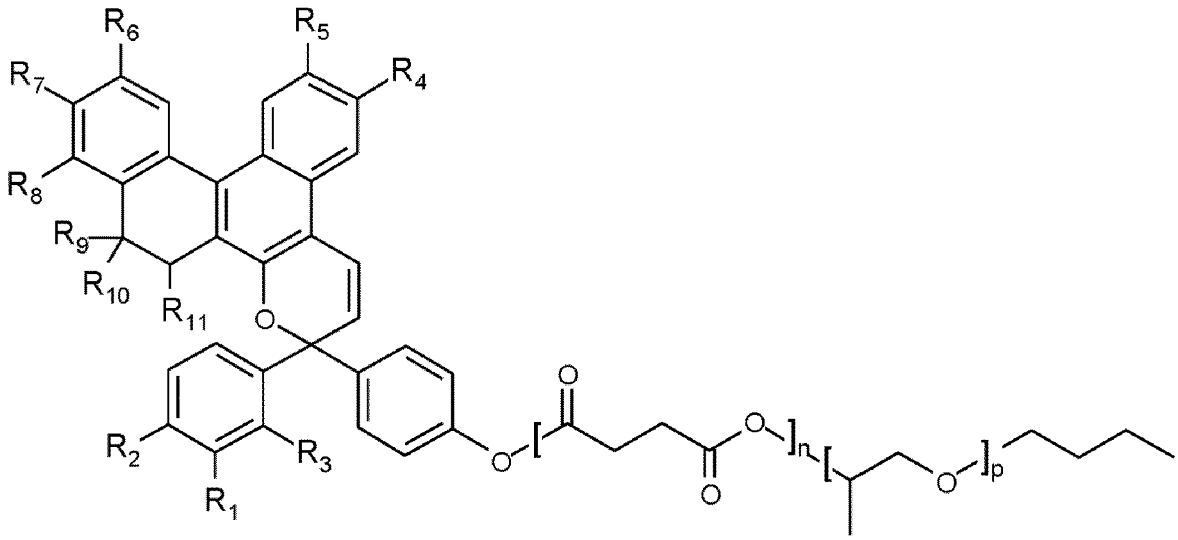

(II)

dans laquelle

n représente un nombre entier compris entre 0 et 1 et p représente un nombre entier compris entre 10 et 50 ;
les radicaux $R_1$ $R_2$ et $R_3$ représentent chacun indépendamment l'un de l'autre un substituant choisi parmi l'hydrogène, le brome, le chlore, le fluor, un radical alkyle en ($C_1$-$C_6$), un radical cycloalkyle en ($C_3$-$C_7$), un radical thioalkyle en ($C_1$-$C_6$), un radical ($C_1$-$C_6$)-alkoxy un radical trifluorométhyle, un radical phényle, un radical 4-méthoxyphényle, un radical phénoxy, un radical 4-méthoxyphénoxy, un radical benzyle, un radical 4-méthoxybenzyle, un radical benzyloxy, un radical 4-méthoxybenzyloxy, un radical biphényle, un radical biphényloxy, un radical naphtyle, un radical naphtoxy, un radical diphénylamino, un radical (4-méthoxyphényl)-phénylamino, un radical bis(4-méthoxyphényl)amino, un radical (4-éthoxyphényl)-phénylamino, un radical bis(4-éthoxyphényl)amino, un radical 10,10-diméthyl-9,10-dihydroacridine, un radical phénothiazinyle, un radical phénoxazinyle, un radical phénazinyle, un radical carbazolyle, un radical 1,2,3,4-tétrahydrocarbazolyle ou un radical 10,11-dihydrodibenz[b,f]azépinyle ;
soit les radicaux $R_1$ et $R_2$ représentent ensemble le groupement $-V-(CH_2)_m-W-$ où V et W sont choisis indépendamment l'un de l'autre parmi les groupements -O-, -S-, $-NC_6H_5-$, $-CH_2-$, - $C(CH_3)_2-$, $-C(C_2H_5)_2-$ or $-C(C_6H_5)_2-$; m représente un nombre entier de 1 à 3 ; sous réserve que, si cette valeur numérique est 2 ou 3, un cycle benzénique peut également être fusionné à deux groupes $CH_2$ adjacents ; et sous réserve également que V

ou W, s'ils représentent - $CH_2$-, ainsi que le groupe $CH_2$ adjacent respectif, peuvent également représenter un cycle benzénique fusionné ;
les radicaux $R_4$ et $R_5$ représentent chacun indépendamment l'un de l'autre un substituant choisi parmi l'hydrogène, le fluor, un radical alkyle en ($C_1$-$C_6$), un radical alcoxy en ($C_1$-$C_6$), un radical phényle, un radical phénoxy, un radical benzyle ou un radical benzyloxy ;
les radicaux $R_6$, $R_7$ et $R_8$ représentent chacun indépendamment l'un de l'autre un substituant choisi parmi l'hydrogène, un radical alkyle ($C_1$-$C_6$), un radical cycloalkyle ($C_3$-$C_7$), un radical alcoxy ($C_1$-$C_6$), un radical phényle ou un radical benzyle ;
soit les radicaux $R_6$ et $R_7$ ensemble ou $R_7$ et $R_5$ ensemble forment un cycle benzénique fusionné qui peut être non substitué, mono- ou disubstitué, les substituants pouvant être choisis parmi l'hydrogène, un radical alkyle ($C_1$-$C_6$), un radical alcoxy ($C_1$-$C_6$), un radical phényle ou un radical benzyle ;
soit les radicaux $R_6$ et $R_7$ ensemble ou $R_7$ et $R_5$ ensemble forment un système cyclique naphtalène condensé, un système cyclique benzofurane condensé, un système cyclique benzothiophène condensé, un système cyclique 3,3-diméthylidène condensé ou un système cyclique 2H-chromène condensé ;
les radicaux $R_9$, $R_{10}$ et $R_{11}$ représentent chacun indépendamment un substituant choisi parmi un radical alkyle ($C_1$-$C_6$) ou un radical phényle.

Figur 1

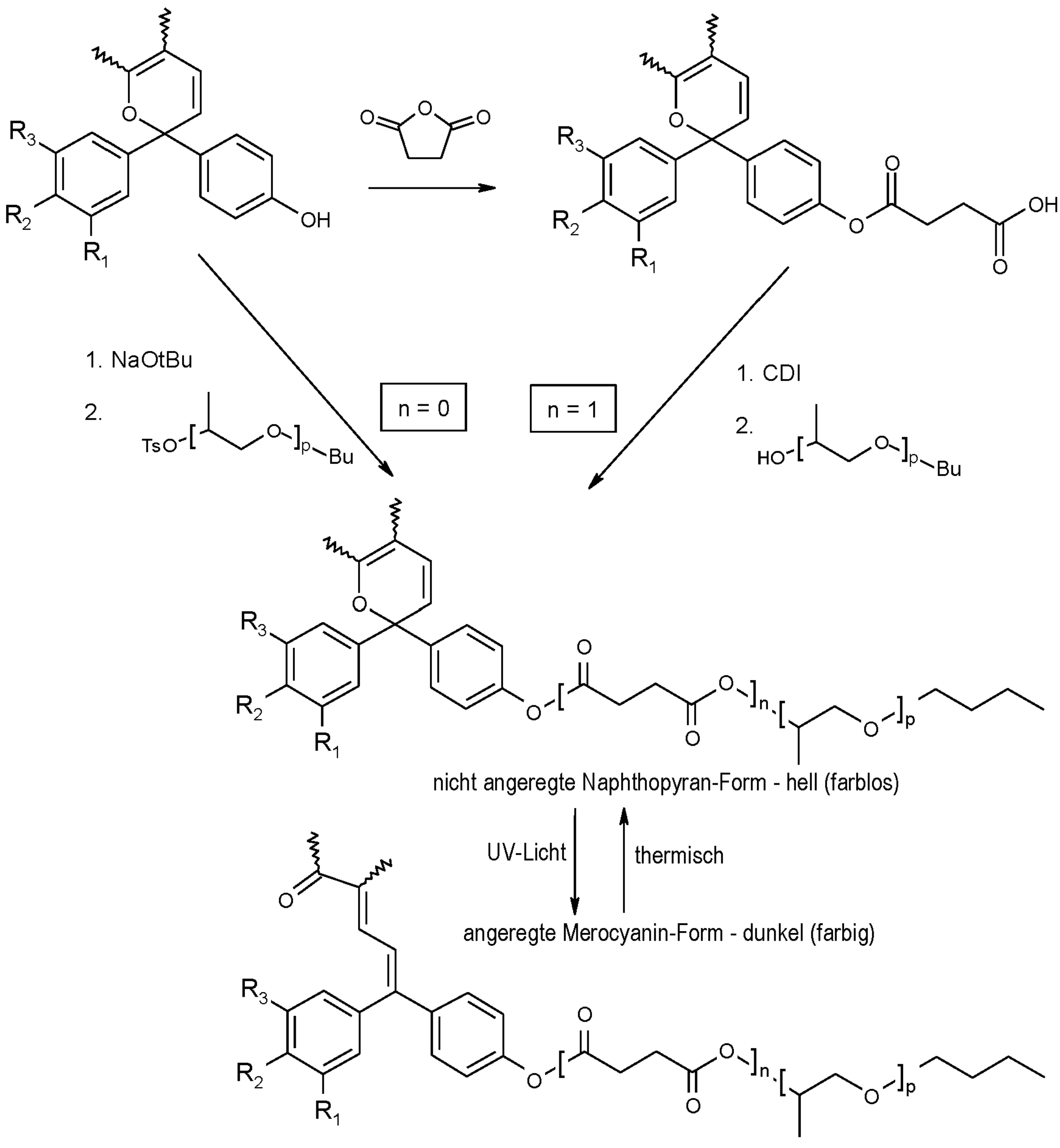
1. NaOtBu
2.
n = 0
n = 1
1. CDI
2.
nicht angeregte Naphthopyran-Form - hell (farblos)
UV-Licht
thermisch
angeregte Merocyanin-Form - dunkel (farbig)

Figur 2

**Farbton der Eindunklung: Darstellung in a*/b*-Farbkoordinaten**
Planglas 2mm (2000ppm photochromer Farbstoff in Thiourethan-Matrix)

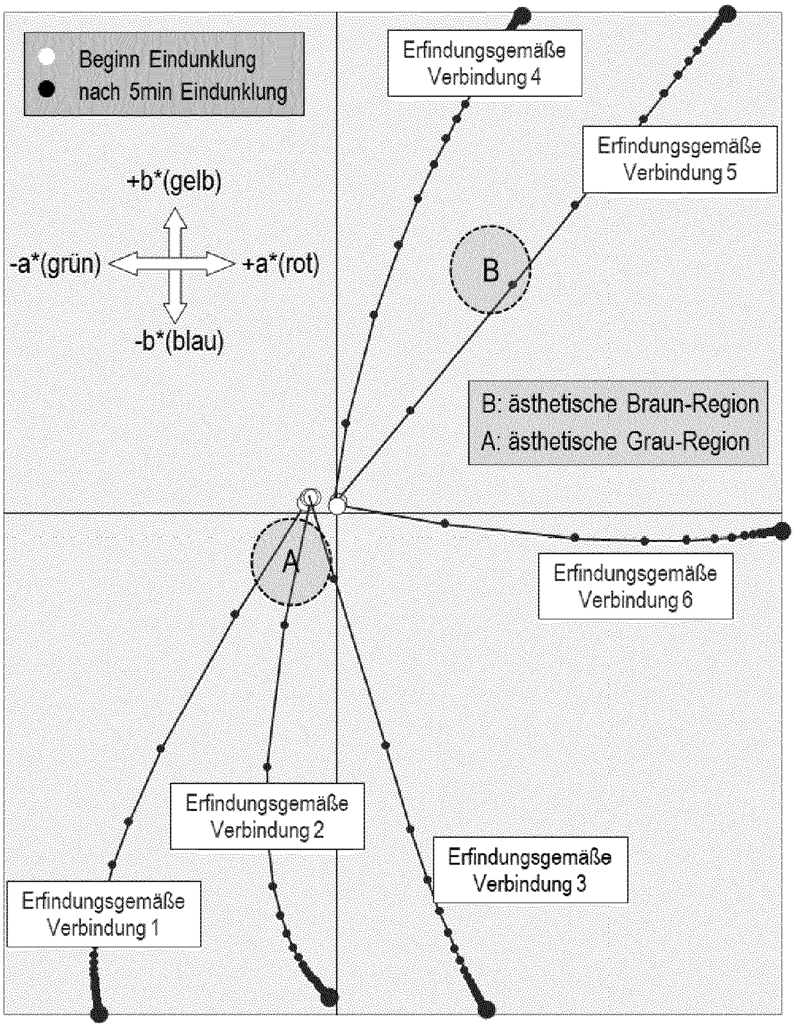

Figur 3

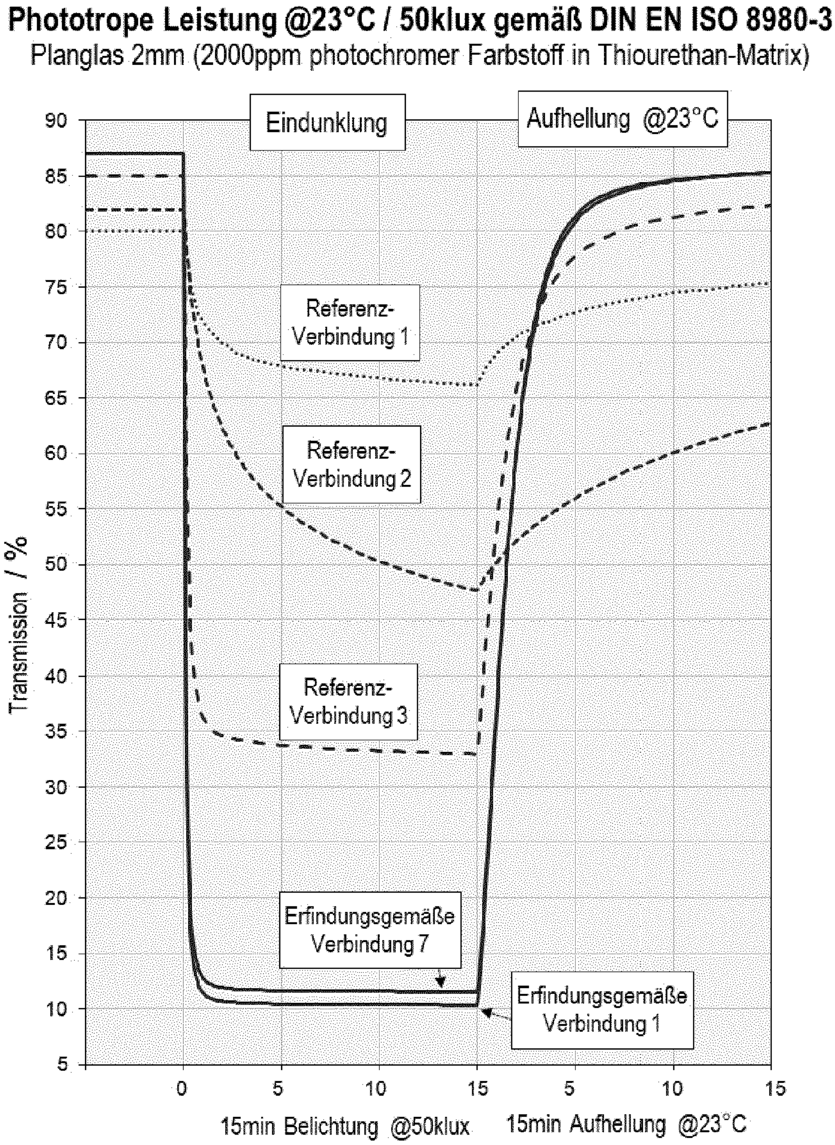
Phototrope Leistung @23°C / 50klux gemäß DIN EN ISO 8980-3
Planglas 2mm (2000ppm photochromer Farbstoff in Thiourethan-Matrix)
Eindunklung
Aufhellung @23°C
Referenz-Verbindung 1
Referenz-Verbindung 2
Referenz-Verbindung 3
Erfindungsgemäße Verbindung 7
Erfindungsgemäße Verbindung 1
Transmission / %
90
85
80
75
70
65
60
55
50
45
40
35
30
25
20
15
10
5
0
5
10
15
5
10
15
15min Belichtung @50klux
15min Aufhellung @23°C

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3351573 A1
- EP 1529780 A
- EP 3807258 A